# EUROPEAN PATENT SPECIFICATION

(11) **EP 4 711 723 B1**
(45) Date of publication and mention of the grant of the patent: **18.11.2026**
(21) Application number: 25770387.6
(22) Date of filing: 15.07.2025
(51) Int. Cl.: G01D 5/38, G01D 5/347

(54) **LIGHT DETECTION DEVICE AND OPTICAL ENCODER**
LICHTDETEKTIONSVORRICHTUNG UND OPTISCHER CODIERER
DISPOSITIF DE DÉTECTION DE LUMIÈRE ET CODEUR OPTIQUE

(30) Priority: 18.07.2024 CN 202410966818
(43) Date of publication of application: 18.03.2026
(73) Proprietor: Quanzhou Ktsense Microelectronics Co., Ltd., Quanzhou, Fujian 362000 (CN)
(72) Inventor: WANG, Chao, Quanzhou, Fujian 362000 (CN); ZHANG, Kaixin, Quanzhou, Fujian 362000 (CN); SHI, Weijie, Quanzhou, Fujian 362000 (CN); WANG, Lu, Quanzhou, Fujian 362000 (CN)
(74) Representative: RGTH
(86) International application number: PCT/CN2025/108561
(87) International publication number: WO 2026/017028

(56) References cited:
- EP-A1- 2 930 473
- EP-A2- 2 045 579
- WO-A1-2025/161603
- CN-A- 1 503 045
- CN-A- 1 503 045
- CN-A- 101 268 330
- CN-A- 101 268 330
- CN-A- 110 617 844
- CN-A- 115 979 315
- CN-A- 117 664 195
- CN-A- 117 664 195
- CN-A- 118 518 147
- US-A- 5 801 378
- US-A1- 2003 047 673
- US-A1- 2003 047 673

## Description

### TECHNICAL FIELD

The present application relates to the field of photoelectric detection technology, and in particular, to a photoelectric detection device and an optical encoder.

### BACKGROUND

An optical encoder is a sensor that may be used to convert mechanical displacement of an output shaft into pulses or digital signals through photoelectric conversion. Optical encoders are widely used in equipment such as numerical control machine tools, motors, robots, and radars, and are configured to detect angles, rotation velocities, or linear displacement.

An optical encoder typically includes a light source, a grating disc or grating bar (briefly referred to as a grating below), and a photoelectric detection unit. There are a plurality of slits, that is, transmissive portions, on the grating. Portions without slits are non-transmissive portions. The transmissive portions and the non-transmissive portions are arranged at equal distances, and the arrangement period of the transmissive portions and the non-transmissive portions is P. The light of the light source passes through the grating to form a periodic optical signal, and the photoelectric detection unit detects the optical signal and converts the optical signal into an electrical signal. However, since the light incident onto the photoelectric detection unit through the grating is equivalent to an optical square wave, and the square wave includes a large quantity of higer-order harmonic components, the electrical signal output by the photoelectric detection unit also includes a large quantity of higher-order harmonics. These higher-order harmonic components will affect processing accuracy of the subsequent signal processing circuits, impact the accuracy of the detection result, and are not conducive to the simplification of the signal processing circuits.

Chinese Patent No. CN202410143700.X discloses a photoelectric detection unit, a photoelectric encoder system, and a motor. In this patent, a specifically designed photoelectric detection unit is used. The geometric shape of the photoelectric detection units is described by using a mathematical description function. With such a geometric shape, higher-order harmonic components in the electrical signal generated by the photoelectric detection unit after it receives light can be effectively suppressed, thereby improving detection accuracy. However, suppression of such higher-order harmonic components depends on the geometric shape of the photoelectric detection units, and requires that the geometric shape of the photoelectric detection units includes curve segments, making it difficult to manufacture the photoelectric detection units

CN 117 664 195 A also discloses a photo-electric detection unit to cancel out unwanted harmonics which uses another method than that presented here below.

Therefore, there is a need for photoelectric detection units of an optical encoder that are easy to manufacture and can well suppress higher-order harmonic components.

### SUMMARY

This application provides a photoelectric detection device for an optical encoder and an optical encoder, which are easy to manufacture and can effectively suppress harmonic components.

According to a first aspect, this application provides a photoelectric detection device for an optical encoder, the photoelectric detection device comprising a first pattern, which is obtained by performing rectangle-to-fan-shape transformation on a second pattern, and the second pattern comprising: a plurality of first-level detection arrays, wherein: each first-level detection array comprises at least one photoelectric detection unit, each photoelectric detection unit outputs one electrical signal, and an electrical signal output by the at least one photoelectric detection unit included in one first-level detection array serves, directly or after combination, as a first-level electrical signal output by the first-level detection array; the plurality of first-level detection arrays are divided into a plurality of second-level detection arrays, each of the plurality of second-level detection arrays comprises t₂ first-level detection arrays, and among t₂ first-level detection arrays belonging to a same second-level detection array, a coordinate difference between corresponding points of two adjacent first-level detection arrays is x×P/N+(t₁×P)/(t₂×N), wherein t₁ is a natural number greater than or equal to 1, t₂ is a natural number greater than or equal to 2, t₁ and t₂ are relatively prime, P is a value predetermined based on a total quantity of slits of a grating used by the optical encoder, N is an odd number greater than or equal to 3, x is a natural number, and x is selected such that the first-level detection arrays do not spatially overlap with each other; and each of the plurality of second-level detection arrays outputs at least one second-level electrical signal, and each second-level electrical signal is obtained by adding together a set of t₂ corresponding first-level electrical signals, which are t₂ corresponding first-level electrical signals respectively output by the t₂ first-level detection arrays that belong to the same second-level detection array, so as to suppress an N^{th}-order harmonic component and harmonic components whose orders are integer multiples of N in the second-level electrical signal.

According to a second aspect, this application provides a photoelectric detection device for an optical encoder, the photoelectric detection device comprising a second pattern, and the second pattern being identical to the "second pattern" described in the first aspect. The reason for this difference is that the photoelectric detection device in the second aspect is generally used in conjunction with a linear grating, and the second pattern may be directly formed on the photoelectric detection device. In contrast, the photoelectric detection device in the first aspect is generally used in conjunction with a disc-shaped grating, necessitating a rectangular-to-fan-shaped transformation to the second pattern before it can be fabricated onto the photoelectric detection device.

According to a third aspect, this application provides an optical encoder. The following technical solution is used: an optical encoder, including: a grating, which has a plurality of slits, where a period of the slits is P; a light source, which is for forming a periodically varying light stripes through the grating; and the photoelectric detection device described above, which is configured to detect the light stripes and convert the optical signal into an electrical signal.

Due to the adoption of the aforementioned technical solutions, this application achieves significant technical effects. By adjusting the coordinate difference between corresponding points of the first-level detection arrays, harmonic components can be effectively suppressed, and the photoelectric detection device is easy to design and manufacture.

### BRIEF DESCRIPTION OF THE DRAWINGS

FIGs. 1 and 2 are schematic diagrams illustrating the working principle of an optical encoder.
FIG. 3 is a schematic diagram of an arrangement of photoelectric detection units according to an embodiment of the present invention.
FIG. 4 is a schematic diagram of an arrangement of photoelectric detection units according to another embodiment of the present invention.
FIG. 5 is a schematic diagram of an arrangement of photoelectric detection units according to another embodiment of the present invention.
FIG. 6 is a schematic diagram of an arrangement of photoelectric detection units according to another embodiment of the present invention.
FIG. 7 is a schematic diagram of an arrangement of photoelectric detection units according to another embodiment of the present invention.
FIG. 8 is a schematic diagram of an arrangement of photoelectric detection units according to another embodiment of the present invention.
FIG. 9 is a schematic diagram of an arrangement of photoelectric detection units according to another embodiment of the present invention.
FIG. 10 is a schematic diagram of an arrangement of photoelectric detection units according to another embodiment of the present invention.
FIG. 11 is a schematic diagram of an arrangement of photoelectric detection units actually manufactured on a photoelectric detection device according to another embodiment of the present invention.
FIG. 12 is a simulated spectrum of an electrical signal output by a photoelectric detection device without any measures taken to suppress harmonic components according to an embodiment of the present invention;
FIG. 13 is a simulated spectrum of an electrical signal output by a photoelectric detection device after the 3^{rd}-order, 5^{th}-order, and 7^{th}-order harmonic components are suppressed by using the method shown in FIG. 7 of the present application.
FIG. 14 is a simulated spectrum of an electrical signal output by a photoelectric detection device after the 3^{rd}-order, 5^{th}-order, 7^{th}-order, and 11^{th}-order harmonic components are suppressed by using the method shown in FIG. 8 of the present application.
FIG. 15 is a simulated spectrum of an electrical signal output by a photoelectric detection device after the 3^{rd}-order, 5^{th}-order, 7^{th}-order, 11^{th}-order, and 13^{th}-order harmonic components are suppressed by using the method shown in FIG. 10 of the present application.

### DETAILED DESCRIPTION

To make the technical problems to be resolved by this application, the technical solutions, and the beneficial effects more clear, the following further describes this application in detail with reference to the accompanying drawings and embodiments. It should be understood that the specific embodiments described herein are merely used to explain this application but are not intended to limit this application.

The terms "first" and "second" are used for descriptive purposes only and should not be construed as indicating or implying relative importance or implicitly indicating the number of technical features indicated. Therefore, features defined by "first" and "second" may explicitly or implicitly include one or more such features. In the description of this application, "a plurality of" means two or more, unless otherwise definitely and specifically limited.

In addition, it should be noted that, in order to describe the technical solutions more clearly, the dimensions in the accompanying drawings of this application are not necessarily drawn to scale and are merely used as examples.

### Embodiments

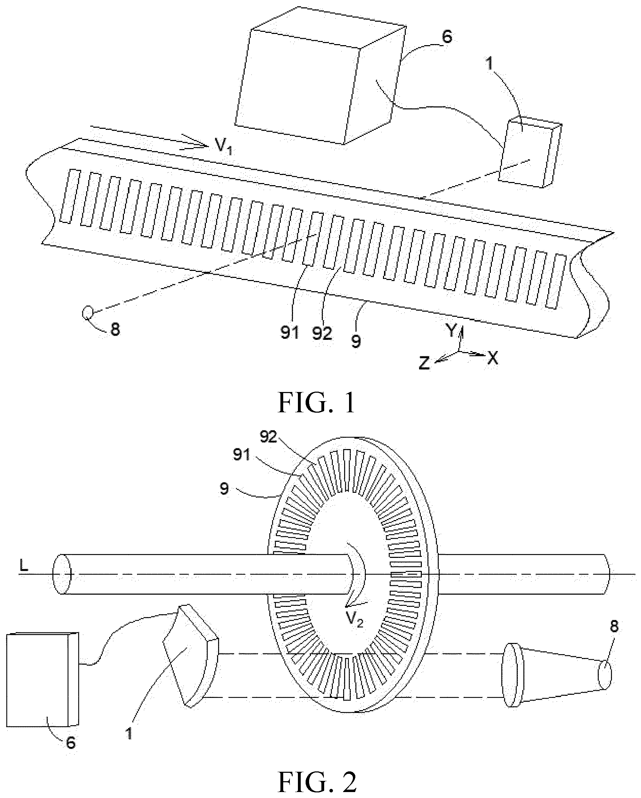

Referring to FIGs. 1 and 2, which are schematic diagrams of the working principle of a photoelectric detection device in an optical encoder. In the optical encoder, the photoelectric detection device 1 is the key part for implementing the detection. Generally, light emitted by a light source 8 is collimated, and then passes through a grating 9 to project light stripes onto the photoelectric detection device 1. The photoelectric detection device 1 includes a plurality of photoelectric detection units. Each photoelectric detection unit outputs an electrical signal. After being processed by a signal processing circuit 6, these electrical signals can yield various physical quantities related to a relative motion to be detected.

To detect the relative motion between two components, the grating 9 and the photoelectric detection device 1 are usually respectively fixed to the two components that move relative to each other. Therefore, a relative motion is also formed between the grating 9 and the photoelectric detection device 1. If a physical quantity such as a linear displacement or a linear displacement velocity between the two components is to be detected, the grating 9 is a linear grating. As shown in FIG. 1, the relative motion between the grating 9 and the photoelectric detection device 1 is indicated by V₁. If a physical quantity such as an angular displacement and a rotational velocity between two components is to be detected, the grating 9 is a disc-shaped grating. As shown in FIG. 2, the relative motion between the grating 9 and the photoelectric detection device 1 is indicated by V₂, and L is a rotational axis around which the relative motion occurs.

The grating 9 includes a slit 91 and a non-transmissive portion 92, which are arranged side by side. When a relative motion is formed between the grating 9 and the photoelectric detection device 1, the light stripes casted onto the photoelectric detection device 1 also forms relative motion with respect to the photoelectric detection units, causing the light intensity sensed by each photoelectric detection unit to periodically change over time. In this way, the electrical signals each output by one photoelectric detection unit also change periodically. By measuring these periodically changing electrical signals, physical quantities such as the relative motion velocity and the relative displacement between the two components can be obtained.

When the grating 9 is a linear grating, light projected onto the photoelectric detection units may be regarded as "square wave" light. The "square wave" light may be expanded into a superposition of a fundamental frequency light wave and odd harmonic components: $rect \left(t\right) = {A}_{0} + \frac{{A}_{1}}{π} cos \left({ω}_{0}t\right) + \frac{{A}_{3}}{π} cos \left(3{ω}_{0}t\right) + \frac{{A}_{5}}{π} cos \left(5{ω}_{0}t\right)$
where A₀ is an average value of a square wave integrated according to time, Aᵢ is an amplitude of each odd harmonic component. The angular velocity of the fundamental frequency light wave is as follows:${ω}_{0} = 2 π / P$
where P is the grating pitch, which essentially represents a spatial frequency and may be calculated by H/I. H is the total length occupied by all the slits 91 of the grating 9, and I is the total quantity of the slits.

When the grating 9 is a disc-shaped grating, the foregoing harmonic decomposition still holds true, except that the quantity representing the spatial frequency is replaced with a rotational angular velocity in unit time. The projected "square wave" light can still be expanded into a superposition of a fundamental frequency light wave and odd harmonic components.

Each photoelectric detection unit on the photoelectric detection device 1 may be considered as a combination of countless extremely small photoelectric detection points. For each photoelectric detection point, after being irradiated by the "square wave" light, it inevitably generates an electrical signal close to the "square wave". The "square wave" electrical signal may also be expanded into a superposition of a fundamental frequency component and odd harmonic components, and the fundamental frequency is the same as the fundamental frequency of the "square wave" light. Therefore, the electrical signal output by each photoelectric detection unit mainly include a fundamental frequency component and odd harmonic components. Generally speaking, the fundamental frequency component is the electrical signal required for detection. Therefore, to improve the detection accuracy, it is necessary to eliminate the odd harmonic components.

Next, the discussion will focus on how to configure the shape, the position, and other parameters of the photoelectric detection units on the photoelectric detection device 1 to eliminate the odd harmonic components. It should be noted that, the method disclosed in this patent application is not limited to the odd harmonic components, that is, the method is not only capable of removing the odd harmonic components. If even harmonic components in an electrical signal output by a photoelectric detection unit need to be eliminated in some application scenarios, the method disclosed in this patent application is also applicable.

It should be noted that, when used in conjunction with a disc-shaped grating, the arrangement scheme of the photoelectric detection units disclosed in the embodiments of this patent application needs to undergo a rectangle-to-fan-shape transformation to obtain the actual pattern to be fabricated on the photoelectric detection device 1. After the rectangle-to-fan-shape transformation, the shape, position, etc. of the photoelectric detection units may undergo slight changes.

If used in conjunction with a linear grating, the arrangement scheme of the photoelectric detection units disclosed in the embodiments of this patent application does not require the rectangle-to-fan-shape transformation and can be directly fabricated onto the photoelectric detection device 1.

Both the rectangle-to-fan-shape transformation and its inverse transformation (that is, fan-shape-to-rectangle transformation) are commonly used in the field of shape transformation, employed to convert patterns of an optical encoder between a Cartesian coordinate system and a polar coordinate system. US Patent Publication No. US7268883B2, entitled "Optoelectronic harmonically filtered detector system for a scanning unit" also discloses a specific algorithm for transforming a pattern between a Cartesian coordinate system and a polar coordinate system for reference.

It should be noted that, the "rectangle-to-fan-shape transformation" and "fan-shape-to-rectangle transformation" methods mentioned in this patent application do not refer to any shape transformation methods that can transform a pattern from a Cartesian coordinate system to a polar coordinate system. Instead, they refer to shape transformation methods that meet the requirements for use in optical encoders. The core requirement thereof is that after shape transformation, the effective photoelectric detection capability of each part of the photoelectric detection unit remains unchanged. The algorithm disclosed in the foregoing US patent US7268883B2 is only a feasible transformation algorithm. Based on its teachings, those skilled in the art can readily design other variant algorithms. The "rectangle-to-fan-shape transformation" method mentioned in this patent application is intended to refer to any shape transformation method suitable for transforming a pattern of an optical encoder from a Cartesian coordinate system to a polar coordinate system. The "fan-shape-to-rectangle transformation" method mentioned in this patent application is intended to refer to any shape transformation method suitable for transforming a pattern of an optical encoder from a polar coordinate system to a Cartesian coordinate system.

When actually fabricating a photoelectric detection device for use with a disc-shaped grating, technicians typically first determine the total quantity I of slits required for the to-be-used grating within a full circumference. Taking the center point of the photoelectric detection device 1 as the reference point, and taking the distance between this reference point and the center of the rotational axis L as R0. They can thus determine an approximate P = 2πR0/I. The reference point can also be determined by other methods, for example, by taking an arbitrary point on the photoelectric detection device 1 as the reference point. Then, using this P as the period, design the pattern of the photoelectric detection units in the Cartesian coordinate system, where the position corresponding to the aforementioned reference point in the Cartesian coordinate system is x = 0 and y = R0. Then, transform the designed pattern of the photoelectric detection units with a rectangle-to-fan-shape transformation method to obtain a pattern of the photoelectric detection units in the polar coordinate system.

The rectangle-to-fan-shape transformation algorithm used above needs to satisfy certain boundary conditions. For example, in the polar coordinate system, at the radial coordinate r = R0 , the length of any arc segment is equal to the length of the corresponding segment in the x-axis direction in the Cartesian coordinate system. Those skilled in the art will appreciate that there are various choices for the specific algorithms and boundary conditions to be used. These are common techniques in the field and thus will not be elaborated upon further here. The setting of the algorithms and the boundary conditions is essentially aimed at satisfying the following condition: the light intensity obtained by any part of the photoelectric detection device 1 remains unchanged before and after the coordinate transformation. In conclusion, when fabricating a photoelectric detection device for use with a disc-shaped grating, P is a preset value that is essentially determined based on the total quantity I of slits in the grating used by the optical encoder.

To facilitate the explanation of the technical solution, the following content will be illustrated using a photoelectric detection device for use with a linear grating as the subject. Those skilled in the art will appreciate that the same content is also applicable to a photoelectric detection device for use with a disc-shaped grating. The difference is that the relevant arrangement scheme needs to be subjected to a rectangle-to-fan-shape transformation before being applied to fabricate the photoelectric detection device.

In this application document, the term "width" refers to the dimension along the lateral direction (the direction of the x-axis as shown in the accompanying drawings). Specifically, it means the distance between the two points obtained by drawing a straight line in the lateral direction that intersects with two sides of a photoelectric detection unit. The terms "spacing" and "coordinate difference between corresponding points" also refer to distances along the lateral direction. The term "lateral direction" refers to the direction of the relative motion between the grating and the photoelectric detection device.

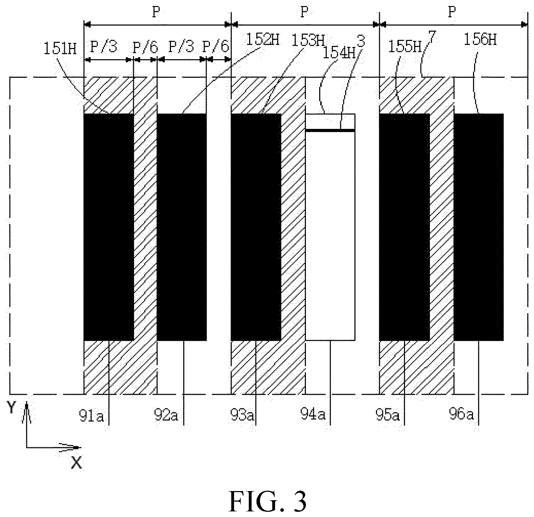

Referring to FIG. 3, FIG. 3 is a schematic diagram of an arrangement of photoelectric detection units according to an embodiment of the present invention. It illustrates an arrangement of photoelectric detection units for suppressing the 3^{rd}-order harmonic component. As shown in FIG. 3, the slit period of the grating is P. After passing through the grating, the light casts light stripes 7 onto the photoelectric detection device, as indicated by a dashed-line box in FIG. 3.

The photoelectric detection device includes a plurality of photoelectric detection units, and FIG. 3 shows only photoelectric detection units 151H to 156H. Photoelectric detection units 151H-156H output electrical signals 91a-96a, respectively. Spacings (in the x-axis direction) between adjacent photoelectric detection units are the same. The following is satisfied: two same photoelectric detection units are arranged side by side within one period P and the two photoelectric detection units are evenly distributed within the period P. As shown in FIG. 3, two identical photoelectric detection units 151H and 152H are arranged in one period P. These units have a rectangular shape and have a width of P/3 (in the x-axis direction). The two photoelectric detection units 151H and 152H have two identical spacings (in the x-axis direction) within the period P, which are both P/6. Therefore, one period P accommodates the photoelectric detection units 151H and 152H and the two spacings between them.

In this arrangement, the two photoelectric detection units within one period P each output one electrical signal. For example, the photoelectric detection units 151H and 152H respectively output electrical signals 91a and 92a. If the odd harmonic component signals and interference signals are filtered out, leaving only the fundamental frequency component signal, then the two electrical signals 91a and 92a will have phases opposite to each other (that is, their phases will differ by 180°). This is because the coordinate difference between the corresponding points of the photoelectric detection units 151H and 152H is half of the fundamental frequency period. The two electrical signals 91a and 92a are inputted into the subsequent signal processing circuit, which helps to determine the amount of displacement that has occurred between the grating and the photoelectric detection device.

To suppress the 3^{rd}-order harmonic component in the output electrical signals, the width of each photoelectric detection unit in the lateral direction is set to the period of this harmonic component to be suppressed. The period of the 3^{rd}-order harmonic component is P/3. For each photoelectric detection unit, its lateral dimension completely covers one period of the 3^{rd}-order harmonic component in the electrical signal. Therefore, at a specific moment, the phase variation of the 3^{rd}-order harmonic components in the electrical signals output by all points along a lateral line 3 within a single photoelectric detection unit 154H exactly covers one period of the 3^{rd}-order harmonic components. If the photoelectric detection unit 154H is considered as an assembly of countless tiny photoelectric detection points, the electrical signal 94a output by the photoelectric detection unit 154H should be the sum of electrical signals output by the photoelectric detection points. Therefore, integrating the 3^{rd}-order harmonic components output by all photoelectric detection points along the single lateral line 3 yields a result of zero. Furthermore, if the photoelectric detection unit 154H is considered as being composed of countless tiny lateral lines 3, then integrating the 3^{rd}-order harmonic components in the electrical signals output by the photoelectric detection points over the entire photoelectric detection unit also yields a result of zero. Therefore, after the light stripes 7 are photoelectrically converted by a single photoelectric detection unit, the 3^{rd}-order harmonic component in the output electrical signal should be zero. Even if some imperfections in device fabrication or external interference still result in the presence of the 3^{rd}-order harmonic component, the main source of the 3^{rd}-order harmonic component has been eliminated, and thus the 3^{rd}-order harmonic component is suppressed.

In FIG. 3, the photoelectric detection unit 154H is shown in white, while the other photoelectric detection units 151H to 153H, 155H, and 156H are in black. This is for easy visualization of the lateral line 3 in the photoelectric detection unit 154H and does not imply any material or other essential differences among the photoelectric detection units. The subsequent accompanying drawings of this patent application also use a similar depiction manner.

It can be seen that by setting the width of a photoelectric detection unit in the lateral direction to one period or an integer multiple of the period of the harmonic component to be suppressed, the harmonic component can be suppressed in the electrical signal output by the photoelectric detection unit. This principle is also applicable to suppression of 5^{th}-order, 7^{th}-order, and higher-order harmonic components. That is to say, a W^{th}-order harmonic component can be eliminated by setting the width of a photoelectric detection unit to P/W (W is the number of order of the harmonic component to be suppressed) or an integer multiple of P/W.

It should be noted that in this case, the electrical signals 91a to 96a output by the photoelectric detection units can be connected according to actual needs. This is because the photoelectric detection units filter out harmonic components only in dependence on their own shape design. That is, the harmonic components to be eliminated have been filtered out from the electrical signals 91a to 96a, there is no need to rely on the combination or the operation of the electrical signals output by different photoelectric detection units to achieve harmonic components filtering.

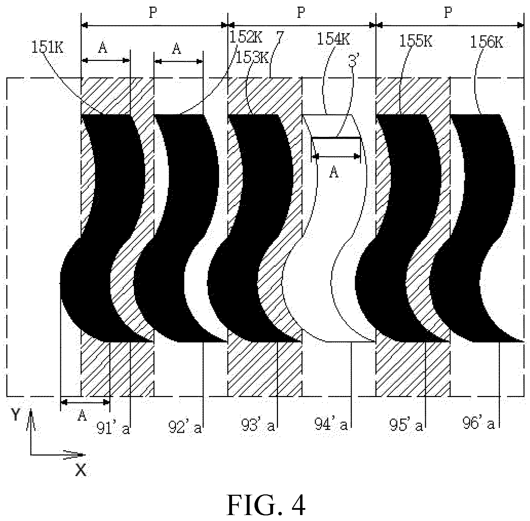

Referring to FIG. 4, FIG. 4 illustrates photoelectric detection units of an arbitrary shape with a constant width A in the lateral direction. As shown in FIG. 4, the shape of photoelectric detection units 151K to 156K is not fixed. However, when viewed in the lateral direction, the width of each lateral line 3' on the photoelectric detection unit 154K is A. A is the period of the harmonic component to be suppressed, for example, A = P/3. On any single lateral line 3', the variation of the 3^{rd}-order harmonic components in the electrical signals output by all photoelectric detection points exactly covers one period. If the single photoelectric detection unit 154K is considered as an assembly of countless tiny photoelectric detection points the electrical signal 94'a output by the photoelectric detection unit 154K should be the sum of electrical signals output by these photoelectric detection points. Therefore, integrating the 3^{rd}-order harmonic components output by these photoelectric detection points along a single lateral line 3' yields a result of zero. Furthermore, if the photoelectric detection unit is considered as being composed of countless tiny lateral lines 3', then integrating the 3^{rd}-order harmonic components in the electrical signals output by all the photoelectric detection points over the entire photoelectric detection unit also yields a result of zero. Therefore, in the method for suppressing a harmonic component described in FIG. 3, it is unnecessary for a photoelectric detection unit to be rectangular. As long as the width of the photoelectric detection unit remains one period of the harmonic component to be suppressed, the harmonic component can be suppressed. In this application document, the term "width" refers to the length between the two points where the lateral line 3' intersects the outer edge of the photoelectric detection unit when draw the lateral line 3' across the photoelectric detection unit in the lateral direction. These two points also serve as the endpoints of the lateral line 3'.

It should be noted that, while the 3^{rd}-order harmonic component is suppressed by using the methods described in FIGs. 3 and 4, harmonic components whose orders are integer multiples of 3 are also suppressed. This is because when the width of a photoelectric detection unit is P/3, then this width is also an integer multiple of the periods of harmonic components such as the 6^{th}-order harmonic component, the 9^{th}-order harmonic component, the 12^{th}-order harmonic component, etc.. As a result, the integration of these harmonic components over the width of the photoelectric detection unit also yields zero, thereby in the electrical signal supressing the 6^{th}-order harmonic component, the 9^{th}-order harmonic component, the 12^{th}-order harmonic component, etc.. Similarly, when using this method to suppress harmonic components such as the 5^{th}-order, the 7^{th}-order, and the 11^{th}-order and other harmonic components, harmonic components whose orders are integer multiples of the orders of these harmonic components to be suppressed are also suppressed.

It should be noted that, when using the methods introduced in FIGs. 3 and 4 to suppress the 3^{rd}-order harmonic component, the number of photoelectric detection units arranged within one period P is unnecessarily two, and may be three, four, or more, and it may also be just one. Arranging a different number of photoelectric detection units in one period P will affect the ease of signal processing by the subsequent signal processing circuit. Nevertheless, as long as the width of each photoelectric detection unit is one period or integer multiple of the period of the harmonic component to be suppressed, the harmonic component can be suppressed. However, when arranging a different number of photoelectric detection units within one period P while there is also a requirement for the width of each individual photoelectric detection unit, it is important to ensure that these photoelectric detection units can be placed within one period P without overlapping. For example, in certain scenarios, it is advantageous to arrange four photoelectric detection units within one period P. However, this arrangement precludes the use of aforementioned method to suppress the 3^{rd}-order harmonic component, as four photoelectric detection units each with a width of P/3 cannot be accommodated within a single period P. In this case, the width of the photoelectric detection unit can be utilized to suppress a higher-order harmonic component, for example, the 5^{th}-order harmonic component, and other methods can be used to suppress the 3^{rd}-order harmonic component.

It should also be noted that, light stripes 7 and the photoelectric detection units will reappear in the lateral direction (x-axis direction), and FIGs. 3 and 4 only show a part of them. The length of the light stripes 7 in the vertical direction (y-axis direction) may be much greater than the length of the photoelectric detection units in the vertical direction, and FIGs. 3 and 4 only show a part of the light stripes 7. The photoelectric detection units may also reappear in the vertical direction. Moreover, different photoelectric detection units that reappear in the vertical direction may be connected to each other. FIGs. 3 and 4 only show a part of them.

However, the methods described in FIGs. 3 and 4 can only suppress a single harmonic component and harmonic components whose orders are integer multiples of the single harmonic component, but cannot suppress a plurality of harmonic components that have no integer multiple relationship with the single harmonic component. Yet, the electrical signals output by the photoelectric detection units contains countless harmonic components that have to be suppressed. Even if we only consider those harmonic components with a significant impact, it is necessary to suppress harmonic components such as the 5^{th}-order harmonic component, the 7^{th}-order harmonic component, the 11^{th}-order harmonic component, and the 13^{th}-order harmonic component. Moreover, the more harmonic components that can be suppressed, the better.

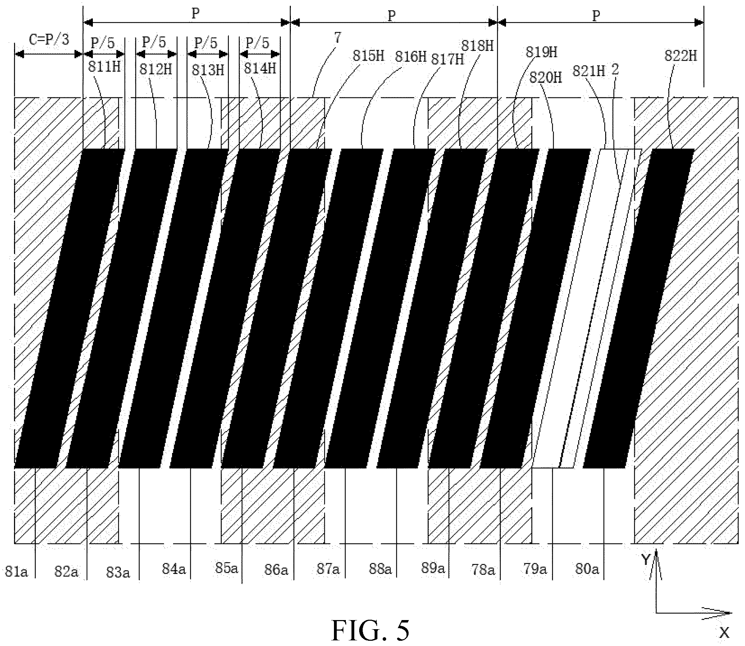

Referring to FIG. 5, which is a schematic diagram of an arrangement of photoelectric detection units according to another embodiment of the present invention. It illustrates an arrangement of photoelectric detection units for suppressing both the 3^{rd}-order harmonic component and the 5^{th}-order harmonic component. As shown in FIG. 5, the grating has a slit period of P. After passing through the grating, the light casts light stripes 7 on the photoelectric detection device.

The photoelectric detection device includes a plurality of photoelectric detection units, each of which is a parallelogram. FIG. 5 only shows photoelectric detection units 811H to 822H. The spacings (in an x-axis direction) between adjacent the photoelectric detection units are identical. There are four identical photoelectric detection units arranged side by side within one period P, and these four units are evenly distributed within that period P. As shown in the figure, four identical photoelectric detection units 811H to 814H are arranged within one period P. These four photoelectric detection units 811H to 814H have four identical spacings (in the x-axis direction) within the period P. Therefore, within one period P, the photoelectric detection units 811H to 814H and the four spacings between the photoelectric detection units are accommodated.

In this arrangement, the four photoelectric detection units in one period P each output an electrical signal. For example, the photoelectric detection units 811H to 814H respectively output electrical signals 81a to 84a. If the odd harmonic component signals and interference signals are filtered out, leaving only the fundamental frequency component signal, then the phases of the electrical signals output by two adjacent photoelectric detection units will be different by 90°. This is because, among the photoelectric detection units 811H to 814H, the coordinate difference between corresponding points of two adjacent photoelectric detection units is one quarter of the fundamental frequency period. The four electrical signals 81a to 84a, which are inputted into the subsequent signal processing circuit, will be benefit to help obtain how much relative displacement has occurred between the grating and the photoelectric detection device.

To suppress the 5^{th}-order harmonic component in the output electrical signal, the width of each photoelectric detection unit is set to P/5, the principle of which is described with reference to the content described in FIG. 3 and FIG. 4.

To simultaneously suppress the 3^{rd}-order harmonic component in the electrical signal, the degree of tilt of each photoelectric detection unit along the lateral direction is specifically designed. The lateral skew deviation C of a single photoelectric detection unit 821H in the lateral direction is a period of the 3^{rd}-order harmonic component to be suppressed, that is, P/3. As shown in FIG. 5, the "lateral skew deviation C" quantifies the obliqueness of the two laterally-opposing sides of the parallelogram. Concretely, it is defined as the difference between the lateral coordinates of the two endpoints of either side.

The single photoelectric detection unit 821H may be regarded as a combination of countless thin tilted lines 2, the width of which tends to be zero. A single thin tilted line 2 exactly spans a lateral distance of one period of the 3^{rd}-order harmonic component, that is, P/3. Consider the single photoelectric detection unit 821H as an assembly of countless tiny photoelectric detection points. The electrical signal 79a output by the photoelectric detection unit 821H should be the sum of the electrical signals output by each of these photoelectric detection points. Therefore, integrating the 3^{rd}-order harmonic components in the electrical signals output by each photoelectric detection points on the thin tilted line 2 should yield a result of zero. This holds true for each thin tilted line 2, and therefore it also holds true for the entire photoelectric detection unit 821H. Therefore, after the light stripes 7 is photoelectrically converted, the 3^{rd}-order harmonic component in the electrical signal output by the single photoelectric detection unit should be zero. Even if some imperfections in device fabrication or external interference still result in the presence of the 3^{rd}-order harmonic component, the main source of the 3^{rd}-order harmonic component has been eliminated, so that the 3^{rd}-order harmonic component is suppressed.

Thus, by maintaining the width of the photoelectric detection units unchanged and designing the photoelectric detection units to be tilted in the lateral direction, with the lateral skew deviation C being one period or an integer multiple of the periods of a harmonic component to be suppressed, the harmonic component can be suppressed in the electrical signal. This principle is also applicable to the suppression of 5^{th}-order, 7^{th}-order, and higher-order harmonic components. That is to say, the U^{th}-order harmonic component may be eliminated by setting the lateral skew deviation C of a photoelectric detection unit to P/U (U is the order of the harmonic component to be suppressed) or an integer multiple of P/U.

It should be noted that the shape of the photoelectric detection units shown in FIG. 5 is able to suppress both the 3^{rd}-order harmonic component and the 5^{th}-order harmonic component. It is also possible to design the shape of the photoelectric detection units to suppress other combinations of harmonic components, for example, suppress the 5^{th}-order and the 7^{th}-order harmonic components, by correspondingly adjusting the width size and the lateral skew deviation of the photoelectric detection units. For example, to suppress both the 5^{th}-order and the 7^{th}-order harmonic components, one can maintain the arrangement of four photoelectric detection units in one period P, with each photoelectric detection unit having a width of P/5 and a lateral skew deviation of P/7; or alternatively, each photoelectric detection unit having a width of P/7 and a lateral skew deviation of P/5. For another example is to suppress both the 3^{rd}-order and the 7^{th}-order harmonic components. This may be achieved by arranging four photoelectric detection units in one period P, with each photoelectric detection unit having a width of P/7 and a lateral skew deviation of P/3, or by arranging two photoelectric detection units in one period P, with each photoelectric detection unit having a width of P/3 and a lateral skew deviation of P/7. Those skilled in the art will appreciate that the shape of the photoelectric detection unit may be designed according to actual needs to suppress different combinations of harmonic component.

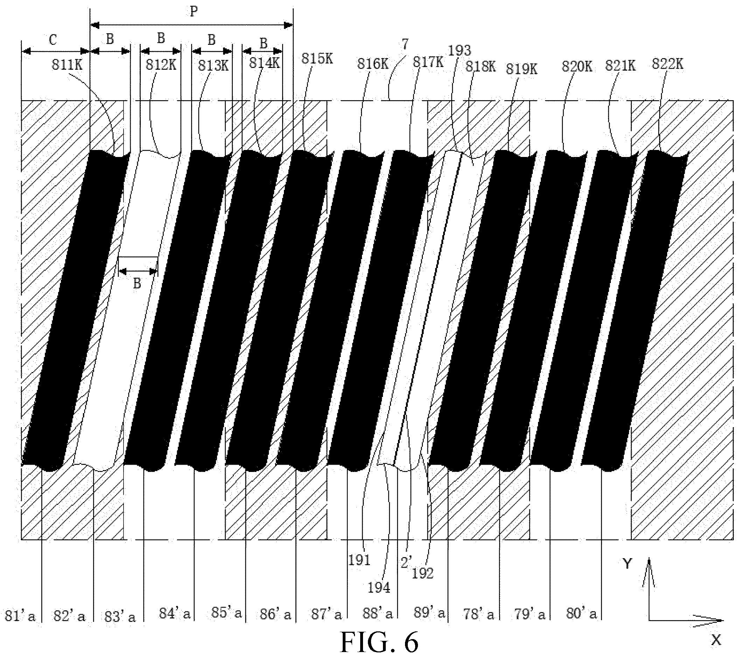

Referring to FIG. 6, FIG. 6 shows other photoelectric detection units 811K to 822K with a width B and a lateral skew deviation C. As shown in FIG. 6, the photoelectric detection unit 818K is in the shape of an irregular quadrilateral and includes four sides 191 to 194. Two sides 191 and 192 are arranged opposite to each other in the lateral direction (x direction), the other two sides 193 and 194 are arranged opposite to each other in the vertical direction (y direction), and the four sides 191 to 194 together form a closed shape. The two sides 191 and 192 arranged opposite to each other in the lateral direction are straight lines that are inclined in the lateral direction and parallel to each other, with a lateral skew deviation of C for both. The two sides 193 and 194 arranged opposite to each other in the vertical direction have an irregular shape, and they are the same in shape. The width of this quadrilateral is B, and the method for determining the width is as shown in the figure. As shown in FIG. 6, the "lateral skew deviation C" quantifies the obliqueness of the two laterally-opposing sides of the parallelogram. Concretely, it is defined as the difference between the lateral coordinates of the two endpoints of either side.

In this way, a single photoelectric detection unit 818K may be decomposed into countless thin tilted lines 2', and the width of each thin tilted line 2' tends to be zero. Since the shapes of the two sides 193 and 194 arranged opposite to each other in the vertical direction are the same, the lengths of all the thin tilted lines 2' are the same. The lateral skew deviation of each thin tilted line 2' is C, and each thin tilted line 2' maintains a uniform slope within the lateral skew deviation C. C is the period of the 3^{rd}-order harmonic component in the electrical signal, that is, P/3. The single photoelectric detection unit 818K is considered as an assembly of countless tiny photoelectric detection points, and the electrical signal 88'a output by the photoelectric detection unit 818K should be the sum of the electrical signals output by the photoelectric detection points. Therefore, integrating the 3^{rd}-order harmonic components in the electrical signals output by each photoelectric detection points along the thin tilted line 2' should yield a result of zero. This holds true for each thin tilted line 2', and thus the integration of the 3^{rd}-order harmonic components in the electrical signals output by the photoelectric detection points over the entire photoelectric detection unit 818K is also zero. Therefore, in the method for suppressing harmonic components described in FIG. 5, it is unnecessary for photoelectric detection units to be in the shape of a parallelogram. As long as their shape is as shown in FIG. 6, the harmonic components may be suppressed. Moreover, the shape of single photoelectric detection units shown in FIG. 6 is unnecessarily a quadrilateral. For example, the two sides 193 and 194 vertically-opposing to each other may be broken lines, which increases the quantity of sides of the shape, making the shape a hexagon or a polygon with even more sides.

It should be noted that, while the 3^{rd}-order harmonic component is suppressed by using the methods described in FIGs. 5 and 6, harmonic components whose orders are integer multiples of 3 are also suppressed. This is because if the lateral skew deviation of a photoelectric detection unit is P/3, and the lateral skew deviation is also integer multiples of periods of the 6^{th}-order harmonic component, the 9^{th}-order harmonic component, the 12^{th}-order harmonic component, etc. As a result, the integration of these harmonic components over the photoelectric detection unit also yields zero, therefore suppressing these harmonic components. This is equally applicable when using the method to suppress harmonic components such as the 5^{th}-order, the 7^{th}-order, the 11^{th}-order, and other harmonic components.

It should be noted that, light stripes 7 and the photoelectric detection units will reappear in the lateral direction (x-axis direction), and FIGs. 5 and 6 only show a part of them. The length of the light stripes 7 in a vertical direction (y-axis direction) may be much greater than the length of the photoelectric detection units in the vertical direction, and only a part of the light stripes 7 is shown in FIGs. 5 and 6. The photoelectric detection units may also reappear in the vertical direction. Moreover, different photoelectric detection units that reappear in the vertical direction may be connected to each other. FIGs. 5 and 6 show only a part of them.

However, in the methods described in FIGs. 5 and 6, it is only able to suppress two harmonic components and harmonic components whose orders are integer multiples of these two harmonic components by setting the shape and the position of the photoelectric detection units, and other harmonic components cannot be suppressed. Yet, in the electrical signal generated by the photoelectric detection units, there are still a plurality of harmonic components that need to be suppressed, such as the 7^{th}-order, the 11^{th}-order, the 13^{th}-order, the 17^{th}-order, and other harmonic components.

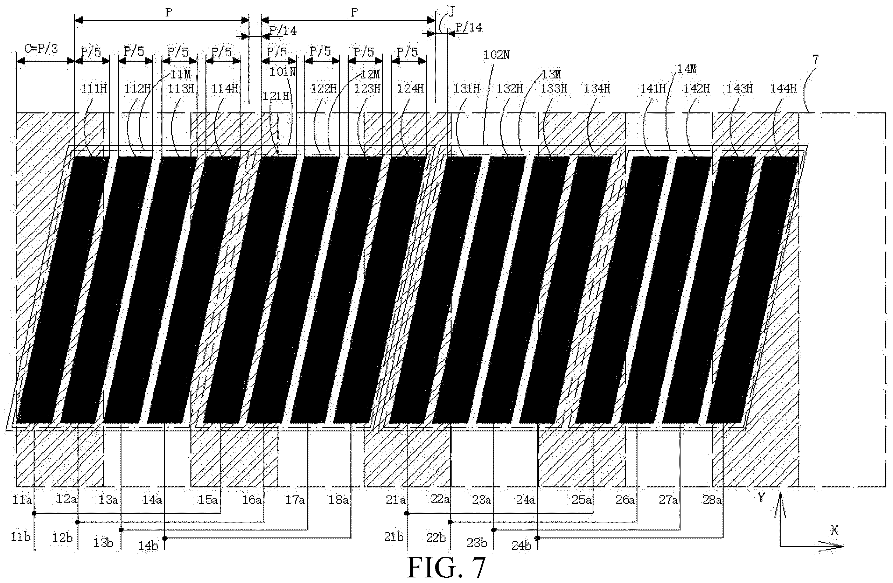

Referring to FIG. 7, FIG. 7 is a schematic diagram of an arrangement of photoelectric detection units according to another embodiment of the present invention, which shows an arrangement of photoelectric detection units capable of suppressing the 7^{th}-order harmonic component. As shown in FIG. 7, the grating has a slit period of P. After passing through the grating, the light casts light stripes 7 on the photoelectric detection units. The photoelectric detection device includes a plurality of photoelectric detection units, with FIG. 7 only showing photoelectric detection units 111H to 114H, 121H to 124H, 131H to 134H, and 141H to 144H. All the photoelectric detection units are arranged along the lateral direction (the x-axis direction shown in FIG. 7). The lateral direction is the relative motion direction between the grating and the photoelectric detection device.

It should be noted that the light stripes 7 and the photoelectric detection units will reappear in the lateral direction (x-axis direction). FIG. 7 only shows a part of them. The length of the light stripes 7 in the vertical direction (y-axis direction shown in FIG. 7) may be much greater than the length of the photoelectric detection units in the vertical direction (y-axis direction), and only a part of the light stripes 7 are shown in FIG. 7. The photoelectric detection units may also reappear in the vertical direction (y-axis direction), and different photoelectric detection units that reappear in the vertical direction may be further connected to each other. FIG. 7 only shows a part of them.

In FIG. 7, four identical photoelectric detection units are arranged side by side within one period P, and these four photoelectric detection units are evenly distributed within the period P. As shown in FIG. 7, within one period P, four identical photoelectric detection units 111H to 114H are arranged. These photoelectric detection units have an identical parallelogram shape. The four photoelectric detection units 111H to 114H are evenly distributed within one period P. Therefore, within one period P, the photoelectric detection units 111H to 114H and the four spacings (x-axis direction) between the photoelectric detection units are accommodated. In this arrangement, the four photoelectric detection units within one period P each output an electrical signal. For example, the photoelectric detection units 111H to 114H respectively output first-level electrical signals 11a to 14a. If odd harmonic component signals and interference signals are filtered out, leaving only the fundamental frequency component signal, then the first-level electrical signals output by adjacent photoelectric detection units will have a phase difference of 90°. This is because, among the photoelectric detection units 111H to 114H, the coordinate difference between corresponding points of two adjacent photoelectric detection units is one quarter of the fundamental frequency period. These four first-level electrical signals 11a to 14a are fed into the subsequent signal processing circuit, which helps to determine the amount of relative displacement that has occurred between the grating and the photoelectric detection device.

Furthermore, every four photoelectric detection units form a first-level detection array. For example, the photoelectric detection units 111H to 114H form a first-level detection array 11M, the photoelectric detection units 121H to 124H form a first-level detection array 12M, the photoelectric detection units 131H to 134H form a first-level detection array 13M, and the photoelectric detection units 141H to 144H form a first-level detection array 14M. Multiple first-level detection arrays further form a second-level detection array. For example, the first-level detection arrays 11M and 12M form a second-level detection array 101N, and the first-level detection arrays 13M and 14M form a second-level detection array 102N. In this way, the plurality of photoelectric detection units included in the entire photoelectric detection device are divided into a plurality of second-level detection arrays, and each second-level detection array includes two first-level detection arrays.

In the first-level detection array 11M, the photoelectric detection units 111H to 114H respectively output electrical signals 11a to 14a, and these electrical signals 11a to 14a directly serve as the first-level electrical signal output by the first-level detection array 11M as a whole. In some other cases, the electrical signals 11a to 14a respectively output by the photoelectric detection units 111H to 114H may be combined to become the first-level electrical signal output by the first-level detection array 11M as a whole. For example, two of these electrical signals 11a to 14a may be combined together to obtain an output electrical signal while the other two of them may be combined together to obtain another output electrical signal. That is, the electrical signals 11a to 14a output by the the photoelectric detection units 111H to 114H included in the first-level detection array 11M serves, directly or after combination, as first-level electrical signals output by the first-level detection array 11M. For two first-level detection arrays that belong to the same second-level detection array, the first-level electrical signals directly output by the corresponding photoelectric detection units of these two first-level detection arrays, as well as the first-level electrical signals obtained by combining the electrical signals directly output by these corresponding photoelectric detection units, are referred to as the "corresponding" first-level electrical signals. For example, in the first-level detection arrays 11M and 12M, the first-level electrical signals 11a and 15a that are directly output by the corresponding photoelectric detection units 111H and 121H are referred to as "corresponding" first-level electrical signals.

To suppress the 7^{th}-order harmonic component in the electrical signal output by the photoelectric detection units, the coordinate difference between corresponding points in two adjacent first-level detection arrays that belong to the same second-level detection array is set to P+P/14. For example, in the second-level detection array 101N, the adjacent first-level detection arrays 11M and 12M have corresponding photoelectric detection units 111H and 121H. Then, the coordinate difference between corresponding points of the photoelectric detection unit 111H and the photoelectric detection unit 121H is set to P+P/14.

The "coordinate difference between corresponding points" refers to the coordinate difference between any two corresponding points in corresponding photoelectric detection units in two adjacent first-level detection arrays belonging to the same second-level detection array. For example, as shown in FIG. 7, the photoelectric detection units 111H and 121H correspond to each other. The upper-left vertex of the photoelectric detection unit 111H and the upper-left vertex of the photoelectric detection unit 121H are corresponding points, and the coordinate difference between the two points is P+P/14.

Since the period of the 7^{th}-order harmonic component is P/7, the coordinate difference between corresponding points of the photoelectric detection units 111H and 121H is P+P/14, which exactly corresponds to 7 and a half periods of the 7^{th}-order harmonic component. Considering each photoelectric detection units 111H and 121H as an assembly of countless tiny photoelectric detection points, the first-level electrical signals 11a and 15a respectively output by the photoelectric detection unit 111H and 121H should be the sum of electrical signals output by all of these photoelectric detection points. In the adjacent first-level detection arrays 11M and 12M, the photoelectric detection units 111H and 121H are corresponding units. For each pair of corresponding photoelectric detection points in these two units, the electrical signals output by them include 7^{th}-order harmonic components whose amplitude is the same while the phase difference is 7×360° +180° , i.e., the phase difference is 180° . Therefore, when the first-level electrical signals 11a and 15a output by the photoelectric detection units 111H and 121H are added together, the 7^{th}-order harmonic components in the resulting second-level electrical signal 11b are canceled out.

As shown in FIG. 7, in the first-level detection array 11M and the first-level detection array 12M, the first-level electrical signals 11a and 15a output by the corresponding two photoelectric detection units 111H and 121H are added to obtain a second-level electrical signal 11b. Here, the first-level electrical signals 11a and 15a form a set of corresponding first-level electrical signals, and they are added to obtain the second-level electrical signal 11b. In the second-level electrical signal 11b, the 7^{th}-order harmonic component is canceled out. Similarly, the 7^{th}-order harmonic components in the second-level electrical signals 12b, 13b, and 14b are also canceled out.

Similarly, in the first-level detection array 13M and the first-level detection array 14M of the second-level detection array 102N, corresponding first-level electrical signals 21a and 25a respectively output by two corresponding photoelectric detection units, the photoelectric detection units 131H and 141H, are added, to obtain a second-level electrical signal 21b. The first-level electrical signals 21a and 25a are a set of corresponding first-level electrical signals, and are added to obtain a second-level electrical signal 21b. In the second-level electrical signal 21b, the 7^{th}-order harmonic component is canceled out. Similarly, the 7^{th}-order harmonic components in the second-level electrical signals 22b, 23b, and 24b are also canceled out.

It can be seen from the above that, when the corresponding first-level electrical signals from all the first-level detection arrays that belong to the same second-level detection array are added, the 7^{th}-order harmonic component in the resulting second-level electrical signal is eliminated. Even if some imperfections of device fabrication or external interference still result in the presence of the 7^{th}-order harmonic component, the main source of the 7^{th}-order harmonic component has been eliminated, and thus the 7^{th}-order harmonic component is suppressed.

The aforementioned principle is equally applicable to the suppression of 3^{rd}-order, 5^{th}-order, 11^{th}-order, and higher-order harmonic components. That is to say, by setting the coordinate difference between corresponding points in two adjacent first-level detection arrays belonging to the same second-level detection array to P+P/6, P+P/10, P+P/22, or P+P/(2×N) (N is the order of the harmonic component to be suppressed), the 3^{rd}-order, 5^{th}-order, 11^{th}-order, and N^{th}-order harmonic components can be eliminated respectively.

In FIG. 7, the lines of the first-level electrical signals output by the photoelectric detection units are connected, which indicates the addition of the corresponding first-level electrical signals. In fact, for current signals, the connection of lines of electrical signals is able to achieve the effect of adding the corresponding electrical signals. For voltage signals, an adder may be added to realize the addition operation.

It should be further noted that, when using the method described in FIG. 7 to suppress the 7^{th}-order harmonic component, the coordinate difference between corresponding points in two adjacent first-level detection arrays that belong to the same second-level detection array is unnecessarily have to be P plus half of the period of the 7^{th}-order harmonic component (the harmonic component to be suppressed), that is, P+(P/7)×(1/2). It may also be P plus 1/3, 1/4, 1/5, or 1/6, etc., of the period of the 7^{th}-order harmonic component (the harmonic component to be suppressed). In other words, the coordinate difference between corresponding points in two adjacent first-level detection arrays that belong to the same second-level detection array is P+P/(t₂×N), where t₂ is the number of first-level detection arrays in a same second-level detection array, t₂ is a natural number greater than or equal to 2, N is the order of the harmonic component to be suppressed, N is an odd number greater than or equal to 3, and N is not the same as the orders of the harmonic components that have already been suppressed. In this case, it is necessary to add the first-level electrical signals output by the corresponding photoelectric detection units in the t₂ first-level detection arrays that belong to the same second-level detection array. As a result, the N^{th}-order harmonic component to be suppressed in the obtained second-level electrical signal is zero.

When the harmonic component to be suppressed is 7^{th}-order, then N = 7 . When t₂ = 3, that is, one second-level detection array comprises three first-level detection arrays, and the coordinate difference between corresponding points in two adjacent first-level detection arrays that belong to a same second-level detection array is P+P/21.Then the 7^{th}-order harmonic components in the first-level electrical signals output by corresponding photoelectric detection units in two adjacent first-level detection arrays have a phase difference of 120°. Therefore, when the three first-level electrical signals output by the corresponding photoelectric detection units in the three first-level detection arrays that belong to the same second-level detection array are added together, the 7^{th}-order harmonic component in the resulting second-level electrical signal is zero.

When the harmonic component to be suppressed is 7^{th}-order, then N = 7. When t₂ = 4, that is, one second-level detection array comprises four first-level detection arrays, and the coordinate difference between corresponding points in two adjacent first-level detection arrays belonging to a same second-level detection array is P+P/28, then the 7^{th}-order harmonic components in the first-level electrical signals output by corresponding photoelectric detection units in two adjacent first-level detection arrays have a phase difference of 90°. Therefore, when the four first-level electrical signals output by the corresponding photoelectric detection units in the four first-level detection arrays that belong to the same second-level detection array are added together, the 7^{th}-order harmonic component in the resulting second-level electrical signal is zero.

When the 7^{th}-order harmonic component is to be suppressed, N = 7. When t₂ = 6, that is, one second-level detection array comprises six first-level detection arrays, and the coordinate difference between corresponding points in two adjacent first-level detection arrays belonging to a same second-level detection array is P+P/42, then the 7^{th}-order harmonic components in the first-level electrical signals output by corresponding photoelectric detection units in the two adjacent first-level detection arrays have a phase difference of 60°. Therefore, when the six first-level electrical signals output by the corresponding photoelectric detection units in the six first-level detection arrays belonging to the same second-level detection array are added together, the 7^{th}-order harmonic component in the resulting second-level electrical signal is zero.

To suppress the N^{th}-order harmonic component, the coordinate difference between corresponding points in two adjacent first-level detection arrays belonging to a same second-level detection array may be set to x×P/N+P/(t₂×N), where N is the order of the harmonic component to be suppressed, t₂ is a natural number greater than or equal to 2, and x may be many values as long as x is a natural number. However, x is selected to prevent the first-level detection arrays from spatially overlapping with each other. Since the period of the N^{th}-order harmonic component generated by the light wave is P/N, the photoelectric detection points of the photoelectric detection units spaced "x×P/N" apart will sense the same N-th order harmonic component in the light wave. The photoelectric detection points of photoelectric detection units spaced P/(t₂×N) apart will have sensed N^{th}-order harmonic components in light waves with a phase difference of 360°/t₂, and the N^{th}-order harmonic components in the first-level electrical signals output by these photoelectric detection units also have a phase difference of 360°/t₂. Therefore, by adding together the first-level electrical signals from the corresponding photoelectric detection units in the t₂ first-level detection arrays that belong to the same second-level detection array, the N^{th}-order harmonic component in the resulting second-level electrical signal will be zero, thus suppressing the N^{th}-order harmonic component.

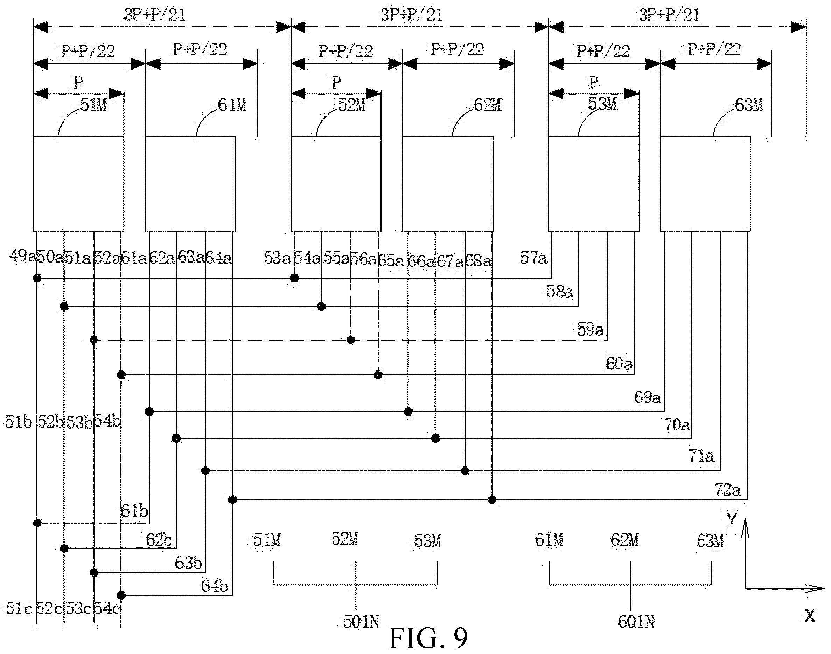

It should be noted that the term "adjacent" in "between two adjacent first-level detection arrays belonging to a same second-level detection array" mentioned above does not necessarily refer to being adjacent in physical space, but rather "adjacent" in the sense of belonging to the same second-level detection array. The "adjacent" first-level detection arrays belonging to the same second-level detection array do not have to be adjacent in physical space in the lateral direction (x-axis direction); other first-level detection arrays belonging to another second-level detection array may be inserted between them. For this point, reference may be made to the embodiment described in conjunction with FIG. 9.

For example, in FIG. 7, the first-level detection arrays 11M and 12M both belong to the second-level detection array 101N, and the coordinate difference between their corresponding points is x×P/N+P/(t₂×N). When x takes a large value, the spacing between two adjacent first-level detection arrays among the t₂ first-level detection arrays that belong to the same second-level detection array 101N is relatively large. In this case, one or more first-level detection arrays belonging to another second-level detection array may be inserted into the physical space between two adjacent first-level detection arrays that belong to a same second-level detection array. For example, in FIG. 7, if x = 14, N = 7, and t₂ = 2, the coordinate difference between corresponding points of the first-level detection arrays 11M and 12M would be 2P+P/14. In this case, a first-level detection array 13M belonging to another second-level detection array 102N may be inserted into the physical space between the two adjacent first-level detection arrays 11M and 12M that belong to the second-level detection array 101N. In this case, although the first-level detection arrays 11M and 12M are not adjacent in physical space, they belong to the second-level detection array 101N and are thus still considered adjacent within the second-level detection array 101N. In this patent application document, the term "adjacent k^{th}-level detection arrays" refer to their adjacency within a same (k+1)^{th}-level detection array.

It should also be noted that in FIG. 7, the elimination of the 7^{th}-order harmonic component is completed inside a single second-level detection array, such as the second-level detection array 101N or 102N. Therefore, the spacing J between the two adjacent second-level detection arrays 101N and 102N does not need to be specifically set and does not affect the suppression of the 7^{th}-order harmonic component. The spacing J may be, for example, approximately zero, or may be another appropriate value. In the embodiment shown in FIG. 7, the spacing J is P/14.

In the aforementioned distance x×P/N+P/(t₂×N), the value of x in x×P/N needs to be chosen to prevent the first-level detection arrays from overlapping with each other in the lateral direction (x-axis direction). For example, in the embodiment shown in FIG. 7, the value of x×P/N needs to be greater than or equal to the sum of the widths of the four photoelectric detection units within one first-level detection array and four spacings (in the x-axis direction) between them. In some other embodiments, the value of x×P/N needs to take into account the size of the first-level detection array that needs to be placed therebetween. For this point, reference may be made to the embodiment in conjunction with FIG. 9.

It should also be noted that in the coordinate difference x×P/N+P/(t₂×N) between the corresponding points mentioned above, the part P/(t₂×N) may also be an integer multiple of P/(t₂×N), that is, (t₁×P)/(t₂×N), where t₁ is a natural number greater than or equal to 1, and t₁ and t₂ are relatively prime. In this case, every t₂ first-level detection arrays still form one second-level detection array. For the t₂ first-level detection arrays belonging to the same second-level detection array, the coordinate difference between corresponding points of adjacent two first-level detection arrays is x×P/N+(t₁×P)/(t₂×N). In this way, a fixed phase difference (t₁/t₂)×360° is introduced for N^{th}-order harmonic component in the electrical signals output by corresponding photoelectric detection units in adjacent first-level detection arrays. The electrical signals output by corresponding photoelectric detection units are either directly used as or combined to form the first-level electrical signal output by the first-level detection array as a whole. Therefore, when the corresponding first-level electrical signals from the t₂ first-level detection arrays belonging to the same second-level detection array are added together, the N^{th}-order harmonic component in the resulting second-level electrical signal is also canceled out or suppressed. Therefore, when the corresponding first-level electrical signals from the t₂ first-level detection arrays that belong to the same second-level detection array are added together, the N^{th}-order harmonic component is also canceled out or suppressed.

It should be noted that, the method described in FIG. 7 for suppressing the 7^{th}-order harmonic component also simultaneously suppresses the harmonic components whose orders are integer multiples of 7. This is because if the coordinate difference between corresponding points in adjacent first-level detection arrays that belong to the same second-level detection array is x×P/7+(t₁×P)/(t₂×7), then this coordinate difference is also an integer multiple of the periods of the 14^{th}-order harmonic component, the 21^{st}-order harmonic component, etc., in the first-level electrical signal. Under such a coordinate difference, the integration of these harmonic components also yeilds zero, thereby suppressing the 14^{th}-order harmonic component, the 21^{st}-order harmonic component, etc., in the second-level electrical signal. This is equally applicable when using the method to suppress the 3^{rd}-order, the 5^{th}-order, and the 11^{th}-order, and other harmonic components.

With the method described in FIG. 7, it is able to suppress one harmonic component and harmonic components whose orders are integer multiples of this harmonic component. If it is desired to simultaneously suppress both the 3^{rd}-order and the 5^{th}-order harmonic components in the first-level electrical signal output by the photoelectric detection units, the specific shape of the photoelectric detection units in FIG. 7 may be set accordingly. For example, the lateral skew deviation C of the parallelogram may be set to the period of the 3^{rd}-order harmonic component to be suppressed, that is, P/3, and the width (in the x-axis direction) of each parallelogram may be set to P/5. The principle is as described in conjunction with FIGs. 3-6.

It should be noted that when the method described in FIG. 7 is used solely to suppress one harmonic component and harmonic components whose orders are integer multiples of the order of this harmonic component, there is no restriction on the specific shape of the photoelectric detection units. The positioning of the photoelectric detection units and the way their electrical signals are connected may be sufficient to suppress them. There is also no need to require that all the photoelectric detection units have the same shape; only those photoelectric detection units whose electrical signals are added together to suppress harmonic components need to have the same shape. There is also no need for the spacing between photoelectric detection units to be uniform. It is simply that having all the photoelectric detection units with the same shape and with the same spacing between them is the easiest to design and is conducive to subsequent signal processing. Therefore, the embodiments of this patent application are all based on this case, but this does not imply any limitation on the invention.

By further setting the shape of the photoelectric detection units, the arrangement of the photoelectric detection units shown in FIG. 7 is able to simultaneously suppress multiple harmonic components and harmonic components whose orders are integer multiples of those of the multiple harmonic components. In addition to the methods mentioned above, parameters such as the shape, the size of the photoelectric detection units, and the coordinate difference between corresponding points in adjacent first-level detection arrays belonging to a same second-level detection array may be further designed to simultaneously suppress other combinations of harmonic components. For example, to simultaneously suppress the 5^{th}-order, 7^{th}-order, and 11^{th}-order harmonic components, it is only necessary to correspondingly adjust the shape and the size of the photoelectric detection units as well as the coordinate difference between the corresponding points.

Moreover, for suppressing the same group of harmonic components, such as the 3^{rd}-order, the 5^{th}-order, and the 7^{th}-order harmonic components, one can choose different manners according to the needs. For example, as described above, the 3^{rd}-order and the 5^{th}-order harmonic components may be suppressed by designing the shape of the photoelectric detection units, and the 7^{th}-order harmonic component may be suppressed by setting a specific coordinate difference between two adjacent first-level detection arrays that belong to a same second-level detection array. Alternatively, the 3^{rd}-order and the 7^{th}-order harmonic components may be suppressed by designing the shape of the photoelectric detection units, and the 5^{th}-order harmonic component may be suppressed by setting a specific coordinate difference between two adjacent first-level detection arrays that belong to a same second-level detection array. Other combinations are also possible. Those skilled in the art will appreciate that specific suppression methods may be designed according to actual needs.

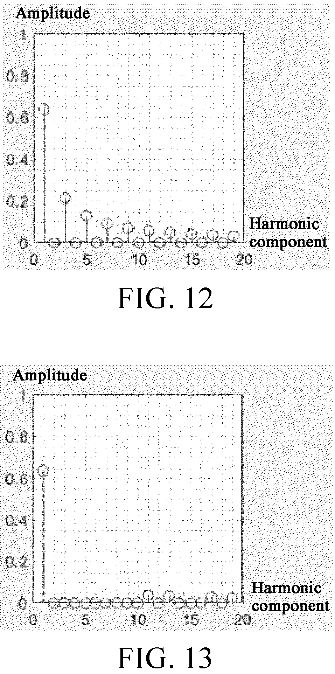

FIG. 12 is a simulated spectrum of an electrical signal output by a photoelectric detection device without any measures taken to suppress harmonic components. FIG. 13 is a simulated spectrum of the electrical signal output by the photoelectric detection device after the 3^{rd}-order, 5^{th}-order, and 7^{th}-order harmonic components are suppressed by using the method shown in FIG. 7. It can be seen from FIG. 13 that the 3^{rd}-order, the 5^{th}-order, and the 7^{th}-order harmonic components in the second-level electrical signals 11b to 14b, 21b to 24b, etc., output by the photoelectric detection device have been completely eliminated.

However, the method introduced in FIG. 7 is only able to simultaneously suppress three harmonic components and harmonic components whose orders are integer multiples of these three harmonic components. It cannot simultaneously suppress four or more harmonic components, for example, the 3^{rd}-order, the 5^{th}-order, the 7^{th}-order, and the 11^{th}-order harmonic components.

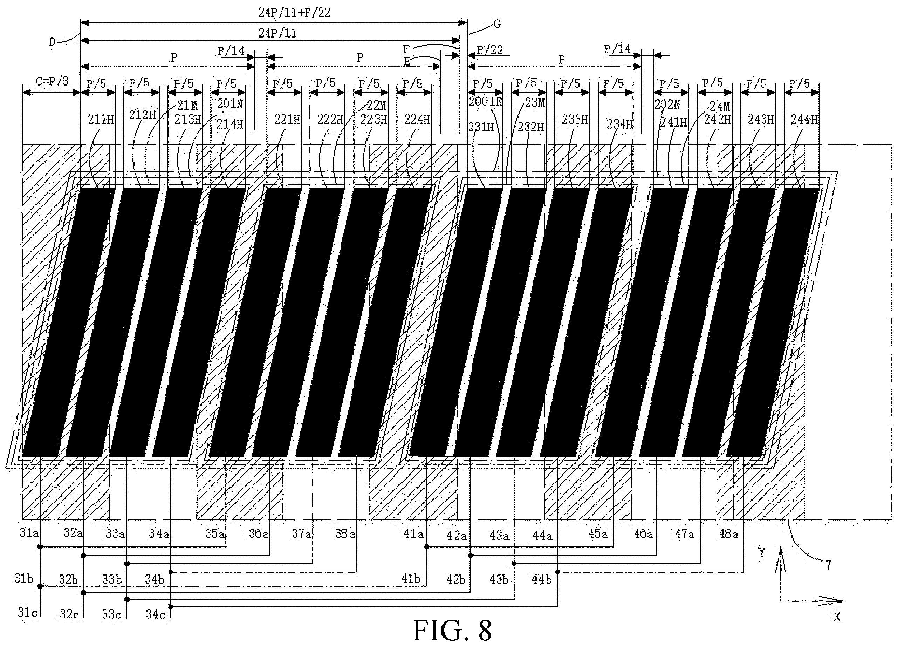

Referring to FIG. 8, FIG. 8 is a schematic diagram of an arrangement of photoelectric detection units according to another embodiment of the present invention. It shows the arrangement of photoelectric detection units capable of suppressing both the 7^{th}-order and the 11^{th}-order harmonic components. As shown in FIG. 8, the grating has a slit period of P. After passing through the grating, the light casts light stripes 7. A photoelectric detection device includes a plurality of photoelectric detection units, and FIG. 8 shows only photoelectric detection units 211H to 214H, 221H to 224H, 231H to 234H, and 241H to 244H. All the photoelectric detection units are arranged in the lateral direction (the x-axis direction shown in FIG. 8). The direction of the relative motion between the grating and the photoelectric detection device is in the lateral direction.

It should be noted that the light stripes 7 and the photoelectric detection units will repeatedly appear in the lateral direction (x-axis direction). FIG. 8 only shows a part of them. The length of the light stripes 7 in the vertical direction (the y-axis direction shown in FIG. 8) may be much greater than the length of the photoelectric detection unit in the vertical direction (y-axis direction), and FIG. 8 only shows a part of the light stripes. The photoelectric detection units may also reappear in the vertical direction (y-axis direction), and different photoelectric detection units that reappearing in the vertical direction may be further connected to each other. FIG. 8 only shows a part of them.

In FIG. 8, four identical photoelectric detection units are arranged side by side within one period P, and these four photoelectric detection units are evenly distributed within the period P. For example, within one period P, four identical photoelectric detection units 211H to 214H are arranged. These photoelectric detection units have a parallelogram shape, and their shapes are identical. The four photoelectric detection units 211H to 214H are evenly distributed within the period P. Therefore, within one period P, the photoelectric detection units 211H to 214H are accommodated as well as the four spacings between them (in the x-axis direction).

In this arrangement, the four photoelectric detection units within one period P each output an electrical signal. For example, the photoelectric detection units 211H to 214H respectively output first-level electrical signals 31a to 34a. If the odd-order harmonic components and interference signals are filtered out, leaving only the fundamental frequency component signals, then the electrical signals output by adjacent photoelectric detection units will have a phase difference of 90°. This is because, among the photoelectric detection units 211H to 214H, the coordinate difference between corresponding points of adjacent photoelectric detection units is one quarter of the fundamental frequency period. These four first-level electrical signals 31a to 34a are inputted into a subsequent signal processing circuit, which helps to obtain the amount of relative displacement that has occurred between the grating and the photoelectric detection device.

Further, every four photoelectric detection units form a first-level detection array. For example, the photoelectric detection units 211H to 214H form the first-level detection array 21M, the photoelectric detection units 221H to 224H form the first-level detection array 22M, the photoelectric detection units 231H to 234H form the first-level detection array 23M, and the photoelectric detection units 241H to 244H form the first-level detection array 24M. Multiple first-level detection arrays further form a second-level detection array. For example, the first-level detection arrays 21M and 22M form the second-level detection array 201N, and the first-level detection arrays 23M and 24M form the second-level detection array 202N. The second-level detection arrays 201N and 202N are shown as the parallelograms drawn with solid lines in FIG. 8. In this way, the multiple photoelectric detection units included in the photoelectric detection device are divided into multiple second-level detection arrays 201N, 202N, ... (not completely shown), with each second-level detection array containing two first-level detection arrays.

To suppress the 7^{th}-order harmonic component in the electrical signal output by the photoelectric detection unit, the coordinate difference between corresponding points in adjacent first-level detection arrays that belong to the same second-level detection array is set to P+P/14. For example, in the adjacent first-level detection arrays 21M and 22M belonging to the same second-level detection array 201N, the photoelectric detection unit 211H corresponds to the photoelectric detection unit 221H. The coordinate difference between corresponding points of the photoelectric detection units 211H and 221H is set to P+P/14. Moreover, in the adjacent first-level detection arrays 21M and 22M, the first-level electrical signals output by the corresponding photoelectric detection units are added together. For example, the first-level electrical signal 31a output by the photoelectric detection unit 211H is added to the first-level electrical signal 35a output by the photoelectric detection unit 221H to obtain the second-level electrical signal 31b. The 7^{th}-order harmonic component in the second-level electrical signal 31b is thereby suppressed or eliminated. The principle can be referred to in the description provided in conjunction with FIG. 7 in this patent application document. In this way, the 7^{th}-order harmonic components in the second-level electrical signals 31b to 34b are suppressed or eliminated.

Similarly, the positional relationship and the connection relationships between the adjacent first-level detection arrays 23M and 24M that belong to the same second-level detection array 202N are set in the same manner as those between the first-level detection arrays 21M and 22M. As a result, the 7^{th}-order harmonic components in the second-level electrical signals 41b to 44b are also suppressed or eliminated.

Further, multiple second-level detection arrays form a third-level detection array. For example, the second-level detection arrays 201N and 202N form the third-level detection array 2001R. Consequently, the multiple photoelectric detection units in the entire photoelectric detection device are divided into a plurality of third-level detection arrays. Each third-level detection array may include two second-level detection arrays, each second-level detection array may include two first-level detection arrays, and each first-level detection array may include four photoelectric detection units.

In this way, a multi-level detection array and a corresponding electrical signal connection structure are formed. The four photoelectric detection units 211H to 214H in the first-level detection array 21M respectively output first-level electrical signals 31a to 34a. The four photoelectric detection units 221H to 224H in the first-level detection array 22M respectively output first-level electrical signals 35a to 38a. The four photoelectric detection units 231H to 234H in the first-level detection array 23M respectively output first-level electrical signals 41a to 44a. The four photoelectric detection units 241H to 244H in the first-level detection array 24M respectively output first-level electrical signals 45a to 48a. The first-level electrical signal 31a is added to the first-level electrical signal 35a to generate the second-level electrical signal 31b. The first-level electrical signal 32a is added to the first-level electrical signal 36a to generate the second-level electrical signal 32b. The first-level electrical signal 33a is added to the first-level electrical signal 37a to generate the second-level electrical signal 33b. The first-level electrical signal 34a is added to the first-level electrical signal 38a to generate the second-level electrical signal 34b. The first-level electrical signal 41a is added to the first-level electrical signal 45a to generate the second-level electrical signal 41b. The first-level electrical signal 42a is added to the first-level electrical signal 46a to generate the second-level electrical signal 42b. The first-level electrical signal 43a is added to the first-level electrical signal 47a to generate the second-level electrical signal 43b. The first-level electrical signal 44a is added to the first-level electrical signal 48a to generate the second-level electrical signal 44b.

When the first-level detection arrays 21M and 22M are considered as a whole, that is, forming the second-level detection array 201N, then the second-level electrical signals 31b to 34b may be considered as the electrical signals output by the second-level detection array 201N. Similarly, the second-level electrical signals 41b to 44b may be considered as the electrical signals output by the second-level detection array 202N. None of the second-level electrical signals 31b to 34b and 41b to 44b includes the 7^{th}-order harmonic components, but they still contain the 11^{th}-order harmonic components.

To suppress the 11^{th}-order harmonic components in the second-level electrical signals output by the second-level detection arrays, the coordinate difference between corresponding points in adjacent second-level detection arrays that belong to a same third-level detection array is set to 24P/11+P/22. For example, in the adjacent second-level detection arrays 201N and 202N belonging to the same third-level detection array 2001R, the photoelectric detection unit 211H corresponds to the photoelectric detection unit 231H, and then the coordinate difference between corresponding points of the photoelectric detection unit 211H and the photoelectric detection unit 231H is set to 24P/11+P/22. In addition, the corresponding second-level electrical signals of the second detection arrays 201N and 202N are added together to obtain a third-level electrical signal. For example, the second-level electrical signals 31b and 41b are added together. The second-level electrical signals 31b and 41b are referred to as a set of corresponding second-level electrical signals, and they are added together to obtain the third-level electrical signal 31c. Similarly, several other third-level electrical signals 32c to 34c are obtained. The third-level electrical signals 31c to 34c are regarded as electrical signals output by the third-level detection array 2001R, which is composed of the second detection arrays 201N and 202N.

The "coordinate difference between corresponding points" refers to the coordinate difference between any two corresponding points in corresponding photoelectric detection units in two adjacent second-level detection arrays that belong to the same third-level detection array. For example, as shown in FIG. 8, the photoelectric detection units 211H and 231H correspond to each other. The upper-left vertex of the photoelectric detection unit 211H and the upper-left vertex of the photoelectric detection unit 231H are corresponding points, and their coordinate difference is 24P/11+P/22.

FIG. 8 shows the specific positional relationships of the photoelectric detection units. Line D indicates the starting position of the first-level detection array 21M, that is, the position of the upper-left vertex of the photoelectric detection unit 211H. Line E indicates the ending position of the first-level detection array 22M, that is, the position obtained by adding the spacing between adjacent photoelectric detection units in the first-level detection array to the position of the upper-right vertex of the photoelectric detection unit 224H. The space between Line D and Line E may be regarded as the spatial dimension occupied by the second-level detection array 201N. Line F indicates the position that is a distance of 24P/11 from Line D, and this distance is an integer multiple of the period P/11 of the 11^{th}-order harmonic component in the light wave. Line G indicates the starting position of the second-level detection array 202N, that is, the position of the upper-left vertex of the photoelectric detection unit 231H. The distance between Line D and Line G is the coordinate difference 24P/11+P/22 between corresponding points of the second-level detection array 201N and the second-level detection array 202N.

Since the period of the 11^{th}-order harmonic component is P/11, and the coordinate difference between corresponding points of the photoelectric detection unit 211H and the photoelectric detection unit 231H is 24P/11+P/22, this coordinate difference corresponds exactly to 24 and a half periods of the 11^{th}-order harmonic component. Considering each photoelectric detection unit 211H and 231H as an assembly of countless tiny photoelectric detection points, the first-level electrical signals 31a and 41a respectively output by the photoelectric detection unit 211H and 231H should both be the sum of the electrical signals output by all the photoelectric detection points. The 11^{th}-order harmonic components in the electrical signals output by corresponding photoelectric detection points in the corresponding photoelectric detection units 211H and 231H in adjacent second-level detection arrays 201N and 202N that belong to the same third-level detection array 2001R have the same amplitude and have phases different by 24×360°+180°, that is, the phase difference is 180°. Therefore, the phase difference between the 11^{th}-order harmonic components in the first-level electrical signals 31a and 41a respectively generated by the photoelectric detection unit 211H and the photoelectric detection unit 231H is 180°. Similarly, the phase difference between the 11^{th}-order harmonic components in first-level electrical signal 35a and first-level electrical signal 45a is 180°. Since the second-level electrical signal 31b is obtained by combining the first-level electrical signals 31a and 35a, and since the second-level electrical signal 41b is obtained by combining the first-level electrical signals 41a and 45a, the phase difference between the 11^{th}-order harmonic components in the second-level electrical signals 31b and 41b is also 180°. Therefore, when they are added together to form the third-level electrical signal 31c, the 11^{th}-order harmonic component in the third-level electrical signal 31c should be zero. In this way, the effect of removing or suppressing the 11^{th}-order harmonic component is achieved. Similarly, the 11^{th}-order harmonic components in the third-level electrical signals 32c to 34c are also canceled out.

It can be seen from the above that, when the corresponding second-level electrical signals from all the second-level detection arrays that belong to a same third-level detection array are added together, the 11^{th}-order harmonic component in the resulting third-level electrical signal is eliminated. Even if some imperfections in device fabrication or external interference still result in the presence of the 11th-order harmonic component, the primary source of the 11th-order harmonic component has been eliminated, and thus the 11^{th}-order harmonic component is suppressed.

There are other methods for implementing the embodiment shown in FIG. 8. To suppress the 11^{th}-order harmonic component, the coordinate difference between corresponding points of adjacent second-level detection arrays 201N and 202N that belong to the same third-level detection array 2001R may further be y×P/M+P/(s₂×M), where M is the order of the harmonic component to be suppressed, and M is not the same as any of the orders of the harmonic components that have been suppressed; s₂ is the quantity of second-level detection arrays in a same third-level detection array, and s₂ is a natural number greater than 2; y is a natural number and may take many values, but the selection of y should prevent the second-level detection arrays from spatially overlapping with each other. That is to say, by adding an additional distance P/(s2 × 11) to an integer multiple of the period P/11 of the 11^{th}-order harmonic component in the electrical signal, a fixed phase difference 360°/s₂ is introduced into the 11^{th}-order harmonic components detected by each pair of corresponding photoelectric detection units in the adjacent second-level detection arrays 201N and 202N.

Accordingly, by adding together the corresponding second-level electrical signals from each and every array among the s₂ second-level detection arrays that belong to the same third-level detection array, the 11^{th}-order harmonic component in the resulting third-level electrical signal is zero. For example, when s₂ = 2, as shown in FIG. 8, by adding together, seperately, the corresponding second-level electrical signals from each and every array among the second-level detection arrays 201N and 202N that belong to the same third-level detection array 2001R, that is, by adding together the second-level electrical signals 31b and 41b, adding together the second-level electrical signals 32b and 42b, adding together the second-level electrical signals 33b and 43b, and adding together the second-level electrical signals 34b and 44b, the third-level electrical signals 31c, 32c, 33c, and 34c are obtained, and all the 11^{th}-order harmonic components in the third-level electrical signals 31c to 34c are zero. When s₂ = 3, in the embodiment shown in FIG. 8, the third-level detection array 2001R should include three second-level detection arrays. Corresponding second-level electrical signals from the three second-level detection arrays are added together, that is, every three corresponding second-level electrical signals are added together to obtain one third-level electrical signal. The 11^{th}-order harmonic components in any one of the resulting third-level electrical signals is zero.

The expression "corresponding" second-level electrical signals herein refers to the scenario within a single third-level detection array, where each second-level detection array outputs multiple second-level electrical signals. Among these second-level electrical signals, those obtained by combining the first-level electrical signals output by corresponding photoelectric detection units are the "corresponding" second-level electrical signals. For example, in FIG. 8, between the second-level detection arrays 201N and 202N, the second-level electrical signal 31b is formed by combining the first-level electrical signals output by the corresponding photoelectric detection units 211H and 221H, and the second-level electrical signal 41b is formed by combining the first-level electrical signals output by the corresponding photoelectric detection units 231H and 241H. Therefore, the second-level electrical signals 31b and 41b are two corresponding second-level electrical signals in the second-level detection arrays 201N and 202N.

Similarly, the term "adjacent" in "adjacent second-level detection arrays" in this embodiment does not necessarily refer to being adjacent in physical space, but rather "adjacent" in the sense of belonging to the same third-level detection array. "Adjacent" second-level detection arrays belonging to the same third-level detection array do not have to be adjacent in physical space in the lateral direction (the x-axis direction); another second-level detection array belonging to another third-level detection array may be inserted between them.

In FIG. 8, the connection of the lines that transmits the first-level electrical signals output by the first-level detection arrays as well as the connection of the lines that transmits the second-level electrical signals output by the second-level detection arrays both represent the addition of the electrical signals. In fact, connecting transmission lines for current signals is able to add the electrical signals together. For voltage signals, an adder may be added to realize the addition operation.

In the aforementioned distance y×P/M+P/(s₂×M), the value of y in y×P/M needs to be chosen to prevent the second-level detection arrays from overlapping with each other in the lateral direction (the x-axis direction). For example, in the embodiment shown in FIG. 8, the value of y×P/M needs to be greater than or equal to the sum of the widths (in the x-axis direction) of the two first-level detection arrays 21M and 22M and the spacings between them. In some other embodiments, the value of y×P/M should also take into account the dimension of the second-level detection arrays that need to be placed therebetween and belong to another third-level detection array. For this point, reference may be made to the embodiment described in conjunction with FIG. 9.

It should also be noted that when the coordinate difference between corresponding points of the secondary detection arrays is the aforementioned distance y×P/M+P/(s₂×M), the phase difference between the M^{th}-order harmonic components in the second-level electrical signals output by adjacent second-level detection arrays that belong to a same third-level detection array is 360°/(s₂×M). This phase difference may also be an integer multiple of P/(s₂×M), that is, (s₁×P)/(s₂×M), where s₁ is a natural number greater than or equal to 1; s1 and s2 are coprime; s₂ second-level detection arrays form a third-level detection array. Therefore, for the s₂ second-level detection arrays belonging to a same third-level detection array, the coordinate difference between corresponding points of adjacent two second-level detection arrays is y×P/M+(s₁×P)/(s₂×M). In this way, a fixed phase difference (s₁/s₂)×360° is introduced into the M^{th}-order harmonic components in the electrical signals output by corresponding photoelectric detection units in two adjacent second-level detection arrays belonging to a same third-level detection array. The electrical signals output by the corresponding photoelectric detection units are ultimately combined to form the second-level electrical signals output by the second-level detection arrays. Therefore, when the corresponding second-level electrical signals from the s₂ second-level detection arrays that belong to a same third-level detection array are added together, the M^{th}-order harmonic component in the resulting third-level electrical signal is also canceled out or suppressed.

It should be noted that the method introduced in FIG. 8 for suppressing the 11^{th}-order harmonic component also simultaneously suppresses harmonic components whose orders are integer multiples of 11. This is because, based on the same coordinate difference, if the integral of the 11^{th}-order harmonic component in the second-level electrical signal is zero, then the integrals of the 22^{nd}-order harmonic components, the 33^{rd}-order harmonic components, etc., in the second-level electrical signal are also zero. As a result, the 22^{nd} harmonic components, the 33^{rd} harmonic components, etc., in the third-level electrical signal are also suppressed. This principle applies equally to the suppression of the 3^{rd}-order, the 5^{th}-order, the 7^{th}-order, and other harmonic components by using this method.

The principle of the embodiment shown in FIG. 8 is also applicable to the suppression of other harmonic components such as the 3^{rd}-order, the 5^{th}-order, and the 13^{th}-order, and other harmonic components. This may be achieved by setting the parameter M in the expression y×P/M+(s₁×P)/(s₂×M).

The method described in FIG. 8 is able to suppress two harmonic components and harmonic components whose orders are integer multiples of the orders of the two harmonic components. If it is also desired to simultaneously suppress the 3^{rd}-order and the 5^{th}-order harmonic components in the electrical signal output by the photoelectric detection unit, one may accordingly design the shape of the photoelectric detection units in FIG. 8. For example, the lateral skew deviation C of the parallelogram may be set to the period of the 3^{rd}-order harmonic component to be suppressed, that is, P/3, and the width (in the x-axis direction) of each parallelogram is set to P/5. This principle is as described in conjunction with FIGs. 3 to 6.

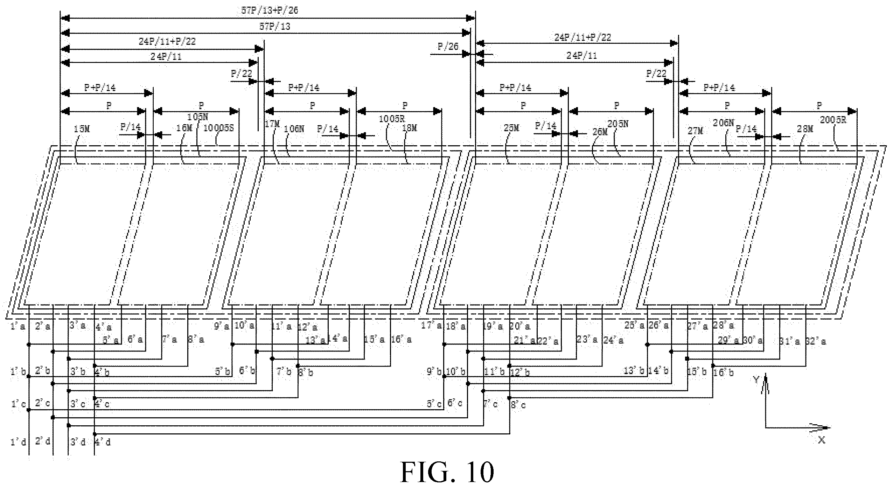

It should be noted that if the method described in FIG. 8 is solely used to suppress two harmonic components and harmonic components whose orders are integer multiples of the orders of the two harmonic components, there is no restriction on the shape of the photoelectric detection units. The positioning of the photoelectric detection units and the way their electrical signals are connected is sufficient to suppress two harmonic components and harmonic components whose orders are integer multiples of those of the two harmonic components. It is unnecessary for all photoelectric detection units to have the same shape; only those photoelectric detection units whose electrical signals are added together to suppress harmonic components need to have the same shape. There is also no need to keep the spacing between the photoelectric detection units uniform. This also applies to the embodiments shown in FIGs. 9 and 10. It is simply that having all photoelectric detection units with the same shape and, if not specifically set otherwise, uniform spacing between them is the easiest to design and is conducive to subsequent signal processing. Therefore, embodiments in this patent application are based on this situation. However, this does not imply any limitation on the invention.

When combined with designing the shape of the photoelectric detection units, the arrangement scheme of the photoelectric detection units shown in FIG. 8 can simultaneously suppress multiple harmonic components and harmonic components whose orders are integer multiples of those of the multiple harmonic components. This is achievable by designing the shape, the size of the photoelectric detection units, and the coordinate differences between corresponding points in adjacent first-level detection arrays. For example, to suppress the 5^{th}-order, the 7^{th}-order, the 11^{th}-order, and the 13^{th}-order harmonic components, it is only necessary to correspondingly adjust the parameters such as the shape and the size of the photoelectric detection units, and the coordinate difference between corresponding points. In addition, for suppressing the same group of harmonic components, for example, the 3^{rd}-order, the 5^{th}-order, the 7^{th}-order, and the 11^{th}-order harmonic components, different schemes may be chosen according to the needs.

For example, as described above, the 3^{rd}-order and the 5^{th}-order may be suppressed by by designing the shape of photoelectric detection units; the 7^{th}-order harmonic component may be suppressed by setting a specific coordinate difference for two adjacent first-level detection arrays belonging to the same second-level detection array; the 11^{th}-order harmonic component may be suppressed by setting a specific coordinate difference for two adjacent second-level detection arrays belonging to the same third-level detection array. Alternatively, the 3^{rd}-order and the 7^{th}-order harmonic components may be suppressed by designing the shape of photoelectric detection units; the 5^{th}-order harmonic component may be suppressed by setting a specific coordinate difference for two adjacent first-level detection arrays belonging to the same second-level detection array; the 11^{th}-order harmonic component may be suppressed by setting a specific coordinate difference for two adjacent second-level detection arrays belonging to the same third-level detection array. Other combinations are also possible. Those skilled in the art will appreciate that suppression schemes may be designed according to actual needs.

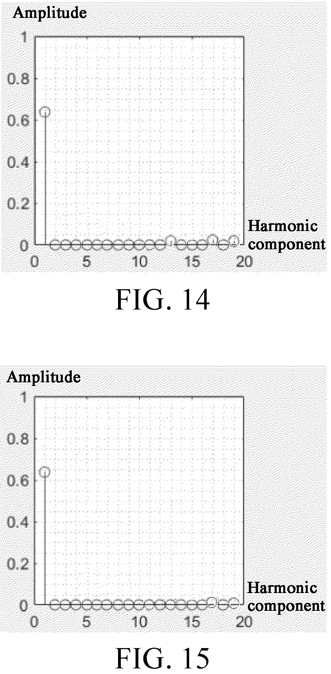

FIG. 12 is a spectrum simulation diagram of the electrical signal output by a photoelectric detection device when no measures are taken to suppress harmonic components. FIG. 14 is a spectrum simulation of the electrical signal output by a photoelectric detection device after the 3^{rd}-order, the 5^{th}-order, the 7^{th}-order, and the 11^{th}-order harmonic components are suppressed by using the method shown in FIG. 8. It can be seen from FIG. 14 that the 3^{rd}-order, the 5^{th}-order, the 7^{th}-order, and the 11^{th}-order harmonic components in the third-level electrical signals 31c to 34c output by the photoelectric detection device have been completely eliminated.

In the above embodiments, the term "adjacent" in "two adjacent second-level detection arrays" does not necessarily refer to being adjacent in physical space, but rather "adjacent" in the sense of belonging to the same third-level detection array. The "adjacent" second-level detection arrays belonging to the same third-level detection array do not have to be adjacent in physical space in the lateral direction (the x-axis direction); another second-level detection array belonging to another third-level detection array may be inserted between them.

For example, in FIG. 8, the second-level detection arrays 201N and 202N belong to the third-level detection array 2001R, and the coordinate difference between their corresponding points is y×P/M+(s₁×P)/(s₂×M). If M = 11, y = 44, s₁ = 1, and s₂ = 2, then the coordinate difference between the corresponding points of the second-level detection arrays 201N and 202N would be 4P+P/22. In this case, there is sufficient spacing between the second-level detection arrays 201N and 202N to accommodate another second-level detection array (not shown in FIG. 8) belonging to another third-level detection array. However, for the third-level detection array 2001R, the second-level detection arrays 201N and 202N are still considered as "adjacent" second-level detection arrays.

Referring to FIG. 9, FIG. 9 is a schematic diagram of an arrangement of photoelectric detection units according to another embodiment of the present invention. It illustrates another implementation method that can simultaneously suppress the 3^{rd}-order, the 5^{th}-order, the 7^{th}-order, and the 11^{th}-order harmonic components. The photoelectric detection device includes multiple photoelectric detection units (not shown in FIG. 9), and a fixed quantity of photoelectric detection units form a first-level detection array. FIG. 9 only shows first-level detection arrays 51M to 53M and 61M to 63M. For instance, in FIG. 9, each of the first-level detection arrays 51M to 53M and 61M to 63M is composed of four photoelectric detection units, which have the same shape and are evenly distributed within the first-level detection array.

It should be noted that, the first-level detection arrays will reappear in the lateral direction (in the x-axis direction), and FIG. 9 only shows a part of them.

In FIG. 9, the first-level detection arrays 51M to 53M belong to the second-level detection array 501N, and the first-level detection arrays 61M to 63M belong to the second-level detection array 601N. The corresponding ones of the first-level electrical signals 49a to 60a output by the sequentially adjacent first-level detection arrays 51M, 52M, and 53M are added together. The corresponding ones of the first-level electrical signals 61a to 72a output by the sequentially adjacent first-level detection arrays 61M, 62M, and 63M are added together.

As can be seen, in the second-level detection array 501N, the first-level detection array 61M belonging to another second-level detection array 601N is inserted between the adjacent first-level detection arrays 51M and 52M. Similarly, the first-level detection array 62M is inserted between the adjacent first-level detection arrays 52M and 53M. In the second-level detection array 601N, the first-level detection array 52M belonging to another second-level detection array 501N is inserted between the adjacent first-level detection arrays 61M and 62M. Similarly, the first-level detection array 53M is inserted between the adjacent first-level detection arrays 62M and 63M.

In the second-level detection array 501N, the coordinate difference between corresponding points of the adjacent first-level detection arrays 51M and 52M and the coordinate difference between corresponding points of the adjacent first-level detection arrays 52M and 53M are both 3P+P/21. To clearly illustrate the technical solution, the upper-left corner of each box which indicates the first-level detection arrays 51M to 53M and 61M to 63M may be considered as a corresponding point of the first photoelectric detection unit in each first-level detection array. The photoelectric detection units in the first-level detection array 51M respectively output first-level electrical signals 49a to 52a. The photoelectric detection units in the first-level detection array 52M respectively output first-level electrical signals 53a to 56a. The photoelectric detection units in the first-level detection array 53M respectively output first-level electrical signals 57a to 60a. Among these first-level electrical signals, the corresponding first-level electrical signals are added together to respectively obtain the second-level electrical signals 51b to 54b, and the 3^{rd}-order, 5^{th}-order, 7^{th}-order harmonic components in the second - level electrical signals 51b to 54b are hereby suppressed or eliminated. The principle may be referred to in the description provided in conjunction with FIGs. 3 to 8 in this patent application document.

Similarly, in the second-level detection array 601N, the coordinate difference between corresponding points of the adjacent first-level detection arrays 61M and 62M and the coordinate difference between corresponding points of the adjacent first-level detection arrays 62M and 63M are both 3P+P/21. The first-level detection arrays 61M, 62M, and 63M respectively output the first-level electrical signals 61a to 64a, 65a to 68a, and 69a to 72a. Among these first-level electrical signals, the corresponding first-level electrical signals are added together to respectively obtain the second-level electrical signals 61b to 64b. The 3^{rd}-order, 5^{th}-order, 7^{th}-order harmonic components in the second-level electrical signals 61b to 64b thereby are suppressed or eliminated. The principle may be referred to in the description provided in conjunction with FIGs. 3 to 8 in this patent application document.

In FIG. 9, the two second-level detection arrays 501N, 601N form a third-level detection array, and the coordinate difference between corresponding points of the second-level detection arrays 501N and 601N is P+P/22. For instance, the coordinate difference between corresponding points of the first-level detection array 51M and the first-level detection array 61M is P+P/22, the coordinate difference between corresponding points of the first-level detection array 52M and the first-level detection array 62M is P+P/22, and the coordinate difference between corresponding points of the first-level detection array 53M and the first-level detection array 63M is P+P/22. The corresponding second-level electrical signals output by the second-level detection arrays 501N and 601N are added together. For instance, the corresponding second-level electrical signals 51b and 61b are added together to obtain the third-level electrical signal 51c, in which the 11^{th}-order harmonic component should be zero. Similarly, the 11^{th}-order harmonic components in the third-level electrical signals 52c to 54c are suppressed or eliminated. The principle may be referred to in the description provided in conjunction with FIGs. 3 to 8 in this patent application document.

Based on the technical principles disclosed in FIGs. 3 to 9, if five or more harmonic components need to be simultaneously suppressed, the third-level detection arrays may be further combined into higher-level detection arrays, and the coordinate difference between corresponding points of two adjacent third-level detection arrays that belong to a same higher-level detection array may be appropriately set. For example, by combining r₂ adjacent third-level detection arrays to form a fourth-level detection array, multiple fourth-level detection arrays can be created. The corresponding third-level electrical signals from the r₂ third-level detection arrays that belong to a same fourth-level detection array are separately added to form r₂ fourth-level electrical signals. In these fourth-level electrical signals, a fifth harmonic components in these fourth-level electrical signals will be suppressed.

Referring to FIG. 10, FIG. 10 is a schematic diagram of an arrangement of photoelectric detection units according to another embodiment of the present invention. It illustrates an implementation method that can simultaneously suppress the 7^{th}-order, and 11^{th}-order, and 13^{th}-order harmonic components. In FIG. 10, each of first-level detection arrays 15M to 18M and 25M to 28M includes several photoelectric detection units, and the quantity and the arrangement of the photoelectric detection units included in each first-level detection array are the same. Each first-level detection array outputs four first-level electrical signals. For example, the first-level detection array 15M outputs first-level electrical signals 1'a, 2'a, 3'a, and 4'a. The quantity of first-level electrical signals may be a different number, depending on the quantity of photoelectric detection units included in one first-level detection array and the way of electrical connections between them.

Adjacent t₂ first-level detection arrays may form a second-level detection array. For example, taking t₂ = 2, the adjacent first-level detection arrays 15M and 16M form the second-level detection array 105N; the adjacent first-level detection arrays 17M and 18M form the second-level detection array 106N; the adjacent first-level detection arrays 25M and 26M form the second-level detection array 205N; the adjacent first-level detection arrays 27M and 28M form the second-level detection array 206N. The coordinate difference between corresponding points of two adjacent first-level detection arrays that belong to the same second-level detection array (for example, the first-level detection arrays 15M and 16M) is set to x×P/N+(t₁×P)/(t₂×N), with N = 7, thereby introducing a phase difference (t₁/t₂)×360° between the 7^{th}-order harmonic components in the electrical signals output by these adjacent first-level detection arrays. For example, taking x = 7, t₁ = 1, and t₂ = 2, the coordinate difference between the foregoing corresponding points is set to P+P/14, thereby introducing a phase difference of 180° between the 7^{th}-order harmonic components in the electrical signals output by these adjacent first-level detection arrays. To more clearly illustrate the technical solution, the upper-left corner of each dash-dotted box which indicates the first-level detection arrays 15M to 18M and 25M to 28M may be regarded as the corresponding point of the first photoelectric detection unit in each first-level detection array.

The corresponding first-level electrical signals output by t₂ first-level detection arrays that belong to a same second-level detection array are added together to obtain a second-level electrical signal, which serves as an output electrical signal of the second-level detection array. For example, the first-level electrical signals 1'a and 5'a correspond to each other and are added together to obtain the second-level electrical signal 1'b; the first-level electrical signals 2'a and 6'a correspond to each other and are added together to obtain the second-level electrical signal 2'b; the first-level electrical signals 3'a and 7'a correspond to each other and are added together to obtain the second-level electrical signal 3'b; the first-level electrical signals 4'a and 8'a correspond to each other and are added together to obtain the second-level electrical signal 4'b. In the second-level electrical signals 1'b, 2'b, 3'b, and 4'b, the 7^{th}-order harmonic components are suppressed or eliminated. Similarly, in the second-level electrical signals 5'b to 16'b, the 7^{th}-order harmonic components are suppressed or eliminated.

Further, adjacent s₂ second-level detection arrays form a third-level detection array. For example, taking s₂ = 2, two adjacent second-level detection arrays 105N and 106N form the third-level detection array 1005R; two adjacent second-level detection arrays 205N and 206N form the third-level detection array 2005R. The coordinate difference between corresponding points of two adjacent second-level detection arrays that belong to the same third-level detection array (for example, the second-level detection arrays 205N and 206N) is set to y×P/M+(s₁×P)/(s₂×M), with M=11, thereby introducing a phase difference (s₁/s₂)×360° between the 11^{th}-order harmonic components in the electrical signals output by these two second-level detection arrays. For example, taking y=24, s₁=1, and s₂=2, the coordinate difference between the foregoing corresponding points is set to 24/11+P/22, thereby introducing a phase difference of 180° between the 11^{th}-order harmonic components in the electrical signals output by two adjacent second-level detection arrays.

The corresponding second-level electrical signals output by s₂ second-level detection arrays belonging to a same third-level detection array are added together to obtain a third-level electrical signal, which serves as an output electrical signal of the third-level detection array. For example, the second-level electrical signals 1'b and 5'b are corresponding signals and are added together to obtain the third-level electrical signal 1'c; the second-level electrical signals 2'b and 6'b are corresponding signals and are added together to obtain the third-level electrical signal 2'c; the second-level electrical signals 3'b and 7'b are corresponding signals and are added together to obtain the third-level electrical signal 3'c; and the second-level electrical signals 4'b and 8'b are corresponding signals and are added together to obtain the third-level electrical signal 4'c. In the third-level electrical signals 1'c, 2'c, 3'c, and 4'c, the 11^{th}-order harmonic components are suppressed or eliminated. Similarly, in the third-level electrical signals 5'c, 6'c, 7'c, and 8'c, the 11^{th}-order harmonic components are suppressed or eliminated.

Further, adjacent r₂ third-level detection arrays may form a fourth-level detection array. For example, taking r₂ = 2, the two adjacent the third-level detection arrays 1005R and 2005R form a fourth-level detection array 10005S. In FIG. 10, only one fourth-level detection array 10005S is shown, but in practice, the photoelectric detection device may further include multiple fourth-level detection arrays, each of which is arranged in the same manner. The corresponding third-level electrical signals output by r₂ third-level detection arrays that belong to a same fourth-level detection array are added together to obtain a fourth-level electrical signal, which serves as an output electrical signal of the fourth-level detection array. For example, the third-level electrical signals 1'c and 5'c are corresponding signals, which form a set of corresponding third-level electrical signals, and are added together to obtain the fourth-level electrical signal 1'd. Similarly, the third-level electrical signals 2'c and 6'c are corresponding signals and are added together to obtain the fourth-level electrical signal 2'd; the third-level electrical signals 3'c and 7'c are corresponding signals and are added together to obtain the fourth-level electrical signal 3'd; the third-level electrical signals 4'c and 8'c are corresponding signals and are added together to obtain the fourth-level electrical signal 4'd.

Further, in the above-mentioned multiple third-level detection array, the coordinate difference between corresponding points of two adjacent third-level detection arrays that belong to a same fourth-level detection array is z×P/Q+(r₁×P)/(r₂×Q), where r₁ and z are natural numbers, r₂ is a natural number greater than 2, and r₁ and r₂ are coprime. r₂ is the quantity of third-level detection arrays that belong to a same fourth-level detection array. In addition, z may be many values as long as z is a natural number, but the selection of z should avoid spatial overlap between the third-level detection arrays. Q is the order of the harmonic component to be suppressed, Q is an odd number greater than 3, and Q is not the same as the orders of the harmonic components that have already been suppressed. That is to say, on the basis of an integer multiple of the period P/Q of the Q^{th}-order harmonic component, an additional distance (r₁×P)/(r₂×Q) is added, thereby introducing a fixed phase difference (r₁/r)×360° for the Q^{th}-order harmonic components in the electrical signals output by corresponding photoelectric detection units in two adjacent third-level detection arrays that belong to a same fourth-level detection array. Accordingly, corresponding third-level electrical signals output by r₂ third-level detection arrays that belong to a same fourth-level detection array are added together. In the resulting fourth-level electrical signal, the Q^{th}-order harmonic component is zero, and the Q^{th}-order harmonic component is suppressed or eliminated.

For example, in FIG. 10, to suppress the 13^{th}-order harmonic component, that is, Q is 13. Taking r₁ = 1, r₂ = 2, and z = 57, the coordinate difference between corresponding points of adjacent third-level detection arrays that belong to a same fourth-level detection array is set to 57P/13+P/26, thereby introducing a phase difference of 180° for the 13^{th}-order harmonic components in the corresponding third-level electrical signals output by these adjacent third-level detection arrays. The corresponding third-level electrical signals output by all third-level detection arrays that belong to the same fourth-level detection array are added together to obtain a fourth-level electrical signal. For example, among the third-level electrical signals output by the two adjacent third-level detection arrays 1005R and 1006R that belong to the same fourth-level detection array 10005S, the third-level electrical signals 1'c and 5'c are corresponding signals. They are added together to obtain the fourth-level electrical signal 1'd. Similarly, the fourth-level electrical signals 2'd, 3'd, and 4'd are obtained. The 13^{th}-order harmonic components in these fourth-level electrical signals 1'd to 4'd are suppressed or eliminated.

In FIG. 10, if it is desired to remove the 3^{rd}-order and 5^{th}-order harmonic components, the shape of each photoelectric detection unit (not shown in FIG. 10) may be set as a parallelogram shown in FIG. 8. For example, the width of the parallelogram may be set to P/5, and the lateral skew deviation may be set to P/3. Each of the first-level detection arrays 15M to 18M and 25M to 28M includes four photoelectric detection units, which have the same shape and are evenly distributed within the first-level detection array. With this setting, in the embodiment shown in FIG. 10, the 3^{rd}-order, 5^{th}-order, 7^{th}-order, 11^{th}-order, 13^{th}-order harmonic components and harmonic components whose orders are integer multiples of the orders of these harmonic components in the output electrical signal can be simultaneously removed. This can achieve relatively good measurement accuracy in most optical encoders.

If it is desired to remove only three harmonic components, then in the embodiment shown in FIG. 10, there is no need to restrict the shape of the photoelectric detection units. If only four harmonic components need to be removed, in the embodiment shown in FIG. 10, only one geometric dimension of the photoelectric detection units need to be restricted. For example, the photoelectric detection units may have the shape shown in FIG. 4 or 6. As for which harmonic components are to be removed and what dimensional parameters are to be employed to achieve the removal, those skilled in the art can readily design them as needed in view of the teachings provided in the present patent application.

FIG. 12 is a spectrum simulation diagram of an electrical signal output by a photoelectric detection device when no measures are taken to suppress harmonic components. FIG. 15 is a spectrum simulation of the electrical signal output by the photoelectric detection device after the 3^{rd}-order, 5^{th}-order, 7^{th}-order, 11^{th}-order, and 13^{th}-order harmonic components are suppressed by using the method shown in FIG. 10. It can be seen from FIG. 15 that the 3^{rd}-order, 5^{th}-order, 7^{th}-order, 11^{th}-order, and 13^{th}-order harmonic components of the fourth-level electrical signals 1'd to 4'd and the like output by the photoelectric detection device are completely eliminated after being processed by the aforementioned method.

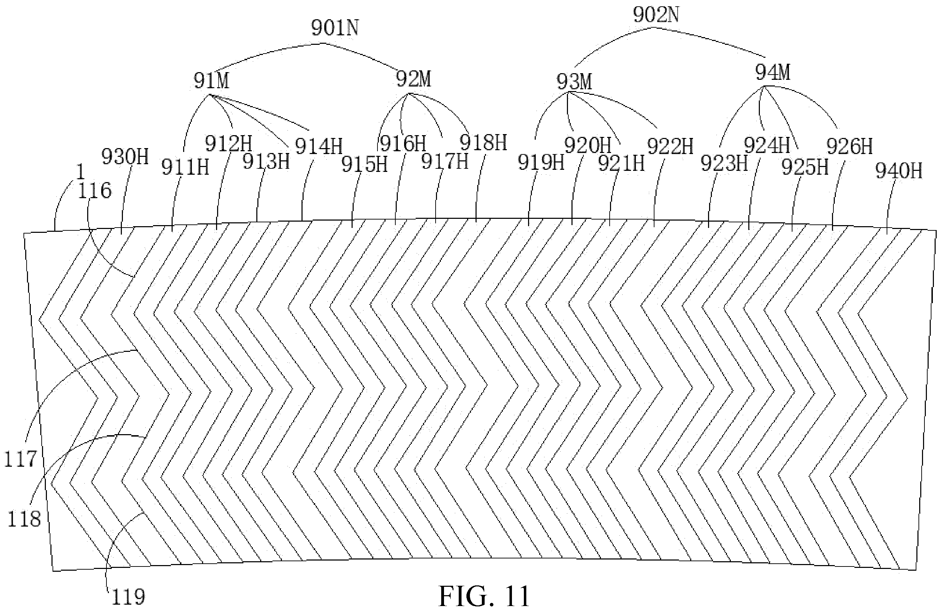

Referring to FIG. **11,** FIG. 11 is a schematic diagram of an arrangement of photoelectric detection units actually manufactured on a photoelectric detection device according to another embodiment of the present invention. The grating used in conjunction with the photoelectric detection device is a disc-shaped grating. The pattern shown in FIG. 11 may be a pattern that is obtained by performing rectangle-to-fan-shape transformation on an arrangement solution in any one of the embodiments disclosed in FIG. 3 to 10, and the pattern can be actually manufactured. 911 is one column of photoelectric detection units. It includes a plurality of segments 116 to 119, each of which is alternately arranged in a mirror-symmetrical relationship in the vertical direction. Each segment may be a photoelectric detection unit in any one of the embodiments disclosed in FIG. 3 to 10, for example, may be a parallelogram shown in FIG. 8. As such, a column of photoelectric detection units is composed of multiple parallelograms that are mirror-symmetrical, repeatedly arranged, and adjacent to each other in the vertical direction (the y-axis direction).

In FIG. 11, the photoelectric detection units 911H to 914H, 915H to 918H, 919H to 922H, and 923H to 926H respectively form the first-level detection arrays 91M, 92M, 93M, and 94M, and the first-level detection arrays 91M to 92M, and 93M to 94M respectively form the second-level detection arrays 901N and 902N. Outside the second-level detection array 901N, an additional photoelectric detection unit 930H is set, which is spaced P/22 laterally from the photoelectric detection unit 911H. Outside the second-level detection array 902N, an additional photoelectric detection unit 940H is set, which is spaced P/22 laterally from the photoelectric detection unit 926H. The aforementioned spacing P/22 is the lateral spacing between the second-level detection arrays 901N and 902N. By adding these two additional photoelectric detection units 930H and 940H, differences in local environments among the photoelectric detection units 911H to 926H inside the main block for photoelectric detection are avoided and thus inconsistent optical-to-electrical conversion efficiency is avoided. Hence, the working environments can be kept as consistent as possible for all the photoelectric detection units 911H to 926H. That is to say, the two additional photoelectric detection units 930H and 940H are configured to alleviate or eliminate the inconsistency in the working environments of all the photoelectric detection units 911H to 926H. It is feasible for the two additional photoelectric detection units 930H and 940H not to be connected to the main block for photoelectric detection or the signal processing circuit.

In conclusion, the the invention is merely defined by the appended claims.

## Claims

1. A photoelectric detection device for an optical encoder, the photoelectric detection device comprising a first pattern, wherein the first pattern is obtained by performing rectangle-to-fan-shape transformation on a second pattern, and the second pattern comprises:
a plurality of first-level detection arrays (11M, 12M, 13M, 14M), wherein each first-level detection array comprises at least one photoelectric detection unit (111H, 114H, 121H, 124H, 131H, 134H, 141H, 144H), each photoelectric detection unit outputs one electrical signal (11a, 15a), and an electrical signal output by the at least one photoelectric detection unit included in one first-level detection array serves, directly or after combination, as a first-level electrical signal output by the first-level detection array, wherein:
the plurality of first-level detection arrays are divided into a plurality of second-level detection arrays (101N, 102N), each of the plurality of second-level detection arrays comprises t₂ first-level detection arrays, and among t₂ first-level detection arrays belonging to a same second-level detection array, a coordinate difference between corresponding points of two adjacent first-level detection arrays is x×P/N+(t₁×P)/(t₂×N), wherein t₁ is a natural number greater than or equal to 1, t₂ is a natural number greater than or equal to 2, t₁ and t₂ are relatively prime, P is a value predetermined based on a total quantity of slits of a grating used by the optical encoder, N is an odd number greater than or equal to 3, x is a natural number, and x is selected such that the first-level detection arrays do not spatially overlap with each other; and
each of the plurality of second-level detection arrays outputs at least one second-level electrical signal, and each second-level electrical signal is obtained by adding together a set of t₂ corresponding first-level electrical signals, which are t₂ corresponding first-level electrical signals respectively output by the t₂ first-level detection arrays that belong to a same second-level detection array, so as to suppress an N^{th}-order harmonic component and harmonic components whose orders are integer multiples of N in the second-level electrical signal.

2. The photoelectric detection device according to claim 1, wherein:
the plurality of second-level detection arrays are divided into a plurality of third-level detection arrays, each of the plurality of the third-level detection arrays comprises s₂ second-level detection arrays, and among s₂ second-level detection arrays belonging to a same third-level detection array, a coordinate difference between corresponding points of two adjacent second-level detection arrays is y×P/M+(s₁×P)/(s₂×M), wherein s₁ is a natural number greater than or equal to 1, s₂ is a natural number greater than or equal to 2, s₁ and s₂ are relatively prime, M is an odd number greater than or equal to 3, M is not equal to N, y is a natural number, and y is selected to prevent the second-level detection arrays from spatially overlapping with each other; and
each of the plurality of third-level detection arrays outputs at least one third-level electrical signal, each third-level electrical signal is generated by adding together a set of s₂ corresponding second-level electrical signals, which are s₂ corresponding second-level electrical signals respectively output by the s₂ first-level detection arrays that belong to the same third-level detection array, so as to suppress an M^{th}-order harmonic component and harmonic components whose orders are integer multiples of M in the third-level electrical signal.

3. The photoelectric detection device according to claim 2, wherein:
the plurality of third-level detection arrays are divided into a plurality of fourth-level detection arrays, each of the plurality of the fourth-level detection array comprises r₂ third-level detection arrays, and among r₂ third-level detection arrays belonging to a same fourth-level detection array, a coordinate difference between corresponding points of two adjacent third-level detection arrays is z×P/Q+(r₁×P)/(r₂×Q), wherein r₁ is a natural number greater than or equal to 1, r₂ is a natural number greater than or equal to 2, r₁ and r₂ are relatively prime, Q is an odd number greater than or equal to 3, Q is not equal to M or N, z is a natural number, and z is selected to prevent the third-level detection arrays from spatially overlapping with each other; and
each of the plurality of fourth-level detection arrays outputs at least one fourth-level electrical signal, and each fourth-level electrical signal is obtained by adding together a set of r₂ corresponding third-level electrical signals, which are r₂ corresponding third-level electrical signals respectively output by the r₂ third-level detection arrays that belong to the same fourth-level detection array, so as to suppress an Q^{th}-order harmonic component and harmonic components whose orders are integer multiples of Q in the fourth-level electrical signal.

4. The photoelectric detection device according to any one of claims 1 to 3, wherein a lateral direction is defined as a direction of relative motion between the grating of the optical encoder and the photoelectric detection device, widths of all the photoelectric detection units in the lateral direction are equal, and the widths of the photoelectric detection units in the lateral direction are an integer multiple of a period of a W^{th}-order harmonic component, that is, the integer multiple of P/W, wherein W is an odd number greater than or equal to 3, and W is not the same as any of orders of harmonic components that have been suppressed.

5. The photoelectric detection device according to any one of claims 1 to 3, wherein a lateral direction is defined as a direction of relative motion between the grating of the optical encoder and the photoelectric detection device, the at least one photoelectric detection unit is in a shape of an irregular quadrilateral, with one pair of opposite sides being arranged opposite to each other in the lateral direction and being parallel to each other, and a lateral skew deviation of the irregular quadrilateral is an integer multiple of a period of a U^{th}-order harmonic component, that is, an integer multiple of P/U, wherein U is an odd number greater than or equal to 3, and U is not the same as any of orders of harmonic components that have been suppressed; the other pair of opposite sides are arranged opposite to each other in a vertical direction, the vertical direction being perpendicular to the lateral direction on a plane on which the at least one photoelectric detection unit is located, and the other pair of opposite sides arranged opposite to each other in the vertical direction are in a same shape.

6. The photoelectric detection device according to any one of claims 1 to 3, a lateral direction is defined as a direction of relative motion between the grating of the optical encoder and the photoelectric detection device, the at least one photoelectric detection unit is in a shape of a parallelogram, with a pair of opposite sides extending in the lateral direction.

7. A photoelectric detection device for an optical encoder, the photoelectric detection device comprising a second pattern, and the second pattern comprising:
a plurality of first-level detection arrays, wherein each first-level detection array comprises at least one photoelectric detection unit, each photoelectric detection unit outputs one electrical signal, and an electrical signal output by the at least one photoelectric detection unit included in one first-level detection array serves, directly or after combination, as a first-level electrical signal output by the first-level detection array; wherein:
the plurality of first-level detection arrays are divided into a plurality of second-level detection arrays, each of the plurality of second-level detection array comprises t₂ first-level detection arrays, and among t₂ first-level detection arrays belonging to a same second-level detection array, a coordinate difference between corresponding points of two adjacent first-level detection arrays is x×P/N+(t₁×P)/(t₂×N), wherein t₁ is a natural number greater than or equal to 1, t₂ is a natural number greater than or equal to 2, t₁ and t₂ are relatively prime, P is a slit period of a grating used in the optical encoder, N is an odd number greater than or equal to 3, x is a natural number, and x is selected to prevent the first-level detection arrays from spatially overlapping with each other; and
each of the plurality of second-level detection arrays outputs at least one second-level electrical signal, and each second-level electrical signal is obtained by adding together a set of corresponding first-level electrical signals, which are t₂ corresponding first-level electrical signals respectively output by the t₂ first-level detection arrays that belong to the same second-level detection array, so as to suppress an N^{th}-order harmonic component and harmonic components whose orders are integer multiple of N in the second-level electrical signal.

8. The photoelectric detection device according to claim 7, wherein:
the plurality of second-level detection arrays are divided into a plurality of third-level detection arrays, each of the plurality of the third-level detection arrays comprises s₂ second-level detection arrays, and among s₂ second-level detection arrays belonging to a same third-level detection array, a coordinate difference between corresponding points of two adjacent second-level detection arrays is y×P/M+(s₁×P)/(s₂×M), wherein s₁ is a natural number greater than or equal to 1, s₂ is a natural number greater than or equal to 2, s₁ and s₂ are relatively prime, M is an odd number greater than or equal to 3, M is not equal to N, y is a natural number, and y is selected to prevent the second-level detection arrays from spatially overlapping with each other; and
each of the plurality of third-level detection arrays outputs at least one third-level electrical signal, each third-level electrical signal is generated by adding together a set of s₂ corresponding second-level electrical signals, which are s₂ corresponding second-level electrical signals output by the s₂ second-level detection arrays belonging to the same third-level detection array, so as to suppress an M^{th}-order harmonic component and harmonic components whose orders are integer multiples of M in the third-level electrical signal.

9. The photoelectric detection device according to claim 8, wherein:
the plurality of third-level detection arrays are divided into a plurality of fourth-level detection arrays, each fourth-level detection array comprises r₂ third-level detection arrays, and among r₂ third-level detection arrays belonging to a same fourth-level detection array, a coordinate difference between corresponding points of two adj acent third-level detection arrays is z×P/Q+(r₁×P)/(r₂×Q), wherein r₁ is a natural number greater than or equal to 1, r₂ is a natural number greater than or equal to 2, r₁ and r₂ are relatively prime, Q is an odd number greater than or equal to 3, Q is not equal to M or N, z is a natural number, and z is selected to prevent the third-level detection arrays from spatially overlapping with each other; and
each of the plurality of fourth-level detection arrays outputs at least one fourth-level electrical signal, and each fourth-level electrical signal is obtained by adding together a set of r₂ corresponding third-level electrical signals, which are r₂ corresponding third-level electrical signals respectively output by the r₂ third-level detection arrays that belong to the same fourth-level detection array, so as to suppress a Q^{th}-order harmonic component and harmonic components whose orders are integer multiple of Q in the fourth-level electrical signal.

10. An optical encoder, comprising:
a grating, which has a plurality of slits, wherein a period of the slits is P;
a light source, which is for forming a periodically varying light stripes through the grating; and
the photoelectric detection device according to any one of claims 1 to 9, which is configured to detect the light stripes and convert the light stripes into an electrical signal.

## Patentansprüche

1. Photoelektrische Erfassungsvorrichtung für einen optischen Encoder, wobei die photoelektrische Erfassungsvorrichtung ein erstes Muster umfasst, wobei das erste Muster durch Ausführen einer Rechteck-zu-Fächer-Form-Transformation an einem zweiten Muster erhalten wird, und das zweite Muster Folgendes umfasst:
eine Vielzahl von Erfassungsarrays ersten Grades (11M, 12M, 13M, 14M),wobei jedes-Erfassungsarray ersten Grades mindestens eine photoelektrische Erfassungseinheit (111H, 114H, 121H, 124H, 131H, 134H, 141H, 144H) umfasst, wobei jede photoelektrische Erfassungseinheit ein elektrisches Signal (11a, 15a) ausgibt, und ein elektrisches Signal, das von der mindestens einen photoelektrischen Erfassungseinheit ausgegeben wird, die in einem Erfassungsarray ersten Grades enthalten ist, direkt oder nach Kombination, als ein elektrisches Signal ersten Grades dient, das von dem Erfassungsarray ersten Grades ausgegeben wird, wobei:
die Vielzahl von Erfassungsarrays ersten Grades in eine Vielzahl von Erfassungsarrays zweiten Grades (101N, 102N) unterteilt ist, wobei jede Vielzahl von Erfassungsarrays zweiten Grades t₂ Erfassungsarrays ersten Grades umfasst, und unter den t₂ Erfassungsarrays ersten Grades, die zu einem gleichen Erfassungsarray zweiten Grades gehören, eine Koordinatendifferenz zwischen entsprechenden Punkten zweier benachbarter Erfassungsarrays ersten Grades x×P/N+(t₁ ×P)/(t₂×N) beträgt, wobei t₁ eine natürliche Zahl größer oder gleich 1 ist, t₂ eine natürliche Zahl größer oder gleich 2 ist, t₁ und t₂ teilerfremd sind, P ein Wert ist, der auf der Grundlage einer Gesamtanzahl von Spalten eines von dem optischen Encoder verwendeten Gitters vorgegeben ist, N eine ungerade Zahl größer oder gleich 3 ist, x eine natürliche Zahl ist, und x so ausgewählt ist, dass die Erfassungsarrays ersten Grades einander nicht räumlich überlappen; und
jede der Vielzahl von Erfassungsarrays zweiten Grades mindestens ein elektrisches Signal zweiten Grades ausgibt, und jedes elektrische Signal zweiten Grades durch Addition einer Menge von t₂ entsprechenden elektrischen Signalen ersten Grades erhalten wird, bei die t₂ entsprechende elektrische Signale ersten Grades sind, die jeweils von den t₂ Erfassungsarrays ersten Grades ausgegeben werden, die zu einem selben Erfassungsarray zweiten Grades gehören, um eine harmonische Komponente der N^{ten} Ordnung und harmonische Komponenten, deren Ordnungen ganzzahlige Vielfache von N sind, im elektrischen Signal zweiten Grades zu unterdrücken.

2. Photoelektrische Erfassungsvorrichtung gemäß Anspruch 1, wobei:
die Vielzahl von Erfassungsarrays zweiten Grades in eine Vielzahl von Erfassungsarrays dritten Grades unterteilt ist, wobei jedes der Vielzahl von Erfassungsarrays dritten Grades s₂ Erfassungsarrays zweiten Grades umfasst, und unter den s₂ Erfassungsarrays zweiten Grades, die zu einem gleichen Erfassungsarray dritten Grades gehören, eine Koordinatendifferenz zwischen entsprechenden Punkten zweier benachbarter Erfassungsarrays zweiten Grades y×P/M+(s₁× P)/(s₂× M) beträgt, wobei s₁ eine natürliche Zahl größer als oder gleich 1 ist, s₂ eine natürliche Zahl größer als oder gleich 2 ist, s₁ und s₂ teilerfremd sind, M eine ungerade Zahl größer als oder gleich 3 ist, M ungleich N ist, y eine natürliche Zahl ist, und y ausgewählt ist, um zu verhindern, dass sich die Erfassungsarrays zweiten Grades einander räumlich überlappen; und
jede der Vielzahl von Erfassungsarrays dritten Grades mindestens ein elektrisches Signal dritten Grades ausgibt, jedes elektrische Signal dritten Grades durch Addition einer Menge von s₂ entsprechenden elektrischen Signalen zweiten Grades erzeugt wird, die s₂ entsprechende elektrische Signale zweiten Grades sind, die jeweils von den s₂ Erfassungsarrays ersten Grades ausgegeben werden, die zu demselben Erfassungsarray dritten Grades gehören, um eine harmonische Komponente der M^{ten} Ordnung sowie harmonische Komponenten, deren Ordnungen ganzzahlige Vielfache von M sind, im elektrischen Signal dritten Grades zu unterdrücken.

3. Photoelektrische Erfassungsvorrichtung gemäß Anspruch 2, wobei:
die Vielzahl von Erfassungsarrays dritten Grades in eine Vielzahl von Erfassungsarrays vierten Grades unterteilt ist, wobei jede der Vielzahl von Erfassungsarrays vierten Grades r₂ Erfassungsarrays dritten Grades umfasst und unter den r₂ Erfassungsarrays dritten Grades, die zu einem gleichen Erfassungsarray vierten Grades gehören, eine Koordinatendifferenz zwischen entsprechenden Punkten zweier benachbarter Erfassungsarrays dritten Grades z×P/Q+(r₁× P)/(r₂× Q) beträgt, wobei r₁ eine natürliche Zahl größer oder gleich 1 ist, r₂ eine natürliche Zahl größer oder gleich 2 ist, r₁ und r₂ teilerfremd sind, Q eine ungerade Zahl größer oder gleich 3 ist, Q ungleich M oder N ist, z eine natürliche Zahl ist und z ausgewählt ist, um zu verhindern, dass die Erfassungsarrays dritten Grades einander räumlich überlappen; und
jede der Vielzahl von Erfassungsarrays vierten Grades mindestens ein elektrisches Signal vierten Grades ausgibt, und jedes elektrische Signal vierten Grades durch Addition einer Menge von r₂ entsprechenden elektrischen Signalen dritten Grades erhalten wird, die r₂ entsprechende elektrische Signale dritten Grades sind, die jeweils von den r₂ Erfassungsarrays dritten Grades ausgegeben werden, die zu demselben Erfassungsarray vierten Grades gehören, um eine harmonische Komponente der Q^{ten} Ordnung und harmonische Komponenten, deren Ordnungen ganzzahlige Vielfache von Q sind, im elektrischen Signal vierten Grades zu unterdrücken.

4. Photoelektrische Erfassungsvorrichtung gemäß einem der Ansprüche 1 bis 3, wobei eine seitliche Richtung als Richtung der Relativbewegung zwischen dem Gitter des optischen Encoders und der photoelektrischen Erfassungsvorrichtung definiert ist, Breiten aller photoelektrischen Erfassungseinheiten inder seitlichen Richtung gleich sind und die Breiten der photoelektrischen Erfassungseinheiten in der seitlichen Richtung ein ganzzahliges Vielfaches einer Periode einer einer harmonischen Komponente W^{ter} Ordnung sind, d. h. das ganzzahlige Vielfache von P/W, wobei W eine ungerade Zahl größer oder gleich 3 ist, und W nicht gleich einer der Ordnungen harmonischer Komponenten, die unterdrückt wurden, ist.

5. Photoelektrische Erfassungsvorrichtung gemäß einem der Ansprüche 1 bis 3, wobei eine seitliche Richtung als eine Richtung der Relativbewegung zwischen dem Gitter des optischen Encoders und der photoelektrischen Erfassungsvorrichtung definiert ist, die mindestens eine photoelektrische Erfassungseinheit die Form eines unregelmäßigen Vierecks aufweist, mit einem Paar gegenüberliegender Seiten, die einander gegenüberliegend in der seitlichen Richtung angeordnet sind und parallel zueinander sind, und eine seitliche Schräglage des unregelmäßigen Vierecks ein ganzzahliges Vielfaches einer Periode einer harmonischen Komponente U^{ter} Ordnung ist, d. h. ein ganzzahliges Vielfaches von P/U, wobei U eine ungerade Zahl größer oder gleich 3 ist, und U ist nicht gleich einer der Ordnungen harmonischer Komponenten, die unterdrückt wurden, ist; das andere Paar gegenüberliegender Seiten einander gegenüberliegend in einer vertikalen Richtung angeordnet ist, die vertikale Richtung senkrecht zu der seitlichen Richtung auf einer Ebene steht, auf der sich die mindestens eine photoelektrische Erfassungseinheit befindet, und das andere Paar gegenüberliegender Seiten, die einander gegenüberliegend in der vertikalen Richtung angeordnet sind, die gleiche Form aufweist.

6. Photoelektrische Erfassungsvorrichtung gemäß einem der Ansprüche 1 bis 3, wobei eine seitliche Richtung als Richtung der Relativbewegung zwischen dem Gitter des optischen Encoders und der photoelektrischen Erfassungsvorrichtung definiert ist, die mindestens eine photoelektrische Erfassungseinheit eine Form eines Parallelogramms aufweist, wobei sich ein Paar gegenüberliegender Seiten in die seitliche Richtung erstreckt.

7. Photoelektrische Erfassungsvorrichtung für einen optischen Encoder, wobei die photoelektrische Erfassungsvorrichtung ein zweites Muster umfasst und das zweite Muster Folgendes umfasst:
eine Vielzahl von Erfassungsarrays ersten Grades, wobei jedes Erfassungsarray ersten Grades mindestens eine photoelektrische Erfassungseinheit umfasst, jede photoelektrische Erfassungseinheit ein elektrisches Signal ausgibt, und ein elektrisches Signal, das durch die mindestens eine photoelektrische Erfassungseinheit ausgegeben wird, die in einem Erfassungsarray ersten Grades enthalten ist, direkt oder nach Kombination, als ein elektrisches Signal ersten Grades dient, das von dem Erfassungsarray ersten Grades ausgegeben wird, wobei:
die Vielzahl von Erfassungsarrays ersten Grades in eine Vielzahl von Erfassungsarrays zweiten Grades unterteilt sind, wobei jedes der Vielzahl von Erfassungsarrays zweiten Grades t₂ Erfassungsarrays ersten Grades umfasst, und unter den t₂ Erfassungsarrays ersten Grades, die zu demselben Erfassungsarray zweiten Grades gehören, die Koordinatendifferenz zwischen entsprechenden Punkten zweier benachbarter Erfassungsarrays ersten Grades x×P/N+(t₁ ×P)/(t₂×N) beträgt, wobei t₁ eine natürliche Zahl größer oder gleich 1 ist, t₂ eine natürliche Zahl größer oder gleich 2 ist, t₁ und t₂ teilerfremd sind, P eine Spaltperiode eines in dem optischen Encoders verwendeten Gitters ist, N eine ungerade Zahl größer oder gleich 3 ist, x eine natürliche Zahl ist, und x ausgewählt ist, um zu verhindern, dass sich die Erfassungsarrays ersten Grades räumlich überlappen und
jedes der Vielzahl von Erfassungsarrays zweiten Grades mindestens ein elektrisches Signal zweiten Grades ausgibt, und jedes elektrische Signal zweiten Grades durch Addition einer Menge von entsprechenden elektrischen Signalen ersten Grades erhalten wird, die t₂ entsprechende elektrische Signalen ersten Grades sind, die jeweils von den t₂ Erfassungsarrays ersten Grades ausgegeben werden, die zu demselben Erfassungsarray zweiten Grades gehören, um eine harmonische Komponente der N^{ten} Ordnung und harmonische Komponenten, deren Ordnungen ganzzahlige Vielfache von N sind, in dem elektrischen Signal zweiten Grades zu unterdrücken.

8. Photoelektrische Erfassungsvorrichtung gemäß Anspruch 7, wobei:
die Vielzahl von Erfassungsarrays zweiten Grades in eine Vielzahl von Erfassungsarrays dritten Grades unterteilt wird, wobei jedes der Vielzahl von Erfassungsarrays dritten Grades s₂ Erfassungsarrays zweiten Grades umfasst und unter den s₂ Erfassungsarrays zweiten Grades, die zu einem gleichen Erfassungsarray dritten Grades gehören, eine Koordinatendifferenz zwischen entsprechenden Punkten zweier benachbarter Erfassungsarrays zweiten Grades y×P/M+(s₁× P)/(s₂× M) beträgt, wobei s₁ eine natürliche Zahl größer oder gleich 1 ist, s₂ eine natürliche Zahl größer oder gleich 2 ist, s₁ und s₂ teilerfremd sind, M eine ungerade Zahl größer oder gleich 3 ist, M ungleich N ist, y eine natürliche Zahl ist, und y ausgewählt ist, um zu verhindern, dass sich die Erfassungsarrays zweiten Grades räumlich überlappen und
jede der Vielzahl von Erfassungsarrays dritten Grades mindestens ein elektrisches Signal dritten Grades ausgibt, wobei jedes elektrische Signal dritten Grades durch Addition einer Menge von s₂ entsprechenden elektrischen Signalen zweiten Grades erzeugt wird, die s₂ entsprechende elektrische Signale zweiten Grades sind, die von den s₂ Erfassungsarrays zweiten Grades ausgegeben werden, die zu demselben Erfassungsarray dritten Grades gehören, um eine harmonische Komponente der M^{ten} Ordnung sowie harmonische Komponenten, deren Ordnungen ganzzahlige Vielfache von M sind, zu unterdrücken.

9. Photoelektrische Erfassungsvorrichtung gemäß Anspruch 8, wobei:
die Vielzahl von Erfassungsarrays dritten Grades in eine Vielzahl von Erfassungsarrays vierten Grades unterteilt ist, wobei jedes Erfassungsarray vierten Grades r₂ Erfassungsarrays dritten Grades umfasst und unter den r₂ Erfassungsarrays dritten Grades, die zu einem gleichen Erfassungsarray vierten Grades gehören, eine Koordinatendifferenz zwischen entsprechenden Punkten zweier benachbarter Erfassungsarrays dritten Grades z×P/Q+(r₁×P)/(r₂×Q) beträgt, wobei r₁ eine natürliche Zahl größer oder gleich 1 ist, r₂ eine natürliche Zahl größer oder gleich 2 ist, r₁ und r₂ teilerfremd sind, Q eine ungerade Zahl größer oder gleich 3 ist, Q ungleich M oder N ist, z eine natürliche Zahl ist und z ausgewählt ist, um zu verhindern, dass sich die Erfassungsarrays dritten Grades einander räumlich überlappen; und
jedes der Vielzahl von Erfassungsarrays vierten Grades mindestens ein elektrisches Signal vierten Grades ausgibt, und jedes elektrische Signal vierten Grades durch Addition einer Menge von r₂ entsprechenden elektrischen Signalen dritten Grades erhalten wird, die r₂ entsprechende elektrische Signale dritten Grades sind, die jeweils von den r₂ Erfassungsarrays dritten Grades ausgegeben werden, die zu demselben Erfassungsarray vierten Grades gehören, um eine harmonische Komponente der Q^{ten} Ordnung und harmonische Komponenten, deren Ordnungen ganzzahlige Vielfache von Q sind, in dem elektrischen Signal vierter Ordnung zu unterdrücken.

10. Optischer Encoder, umfassend:
ein Gitter, das eine Vielzahl von Schlitzen aufweist, wobei eine Periode der Schlitze P beträg;
eine Lichtquelle, die dazu dient, periodisch variierende Lichtstreifen durch das Gitter auszubilden; und
die photoelektrische Erfassungsvorrichtung gemäß einem der Ansprüche 1 bis 9, die so konfiguriert ist, dass sie die Lichtstreifen erfasst und die Lichtstreifen in ein elektrisches Signal umwandelt.

## Revendications

1. Dispositif de détection photoélectrique pour un codeur optique, le dispositif de détection photoélectrique comprenant un premier motif, dans lequel le premier motif est obtenu en effectuant sur un second motif une transformation d'une forme rectangulaire en une forme en éventail, et le second motif comprend :
une pluralité de réseaux de détection de premier niveau (11M, 12M, 13M, 14M), chaque réseau de détection de premier niveau comprenant au moins une unité de détection photoélectrique (111H, 114H, 121H, 124H, 131H, 134H, 141H, 144H), chaque unité de détection photoélectrique délivrant un signal électrique (11a, 15a), et un signal électrique délivré par l'au moins une unité de détection photoélectrique incluse dans un réseau de détection de premier niveau servant, directement ou après combinaison, de signal électrique de premier niveau délivré par le réseau de détection de premier niveau, dans lequel :
la pluralité de réseaux de détection de premier niveau est divisée en une pluralité de réseaux de détection de deuxième niveau (101N, 102N), chacun des réseaux de détection de deuxième niveau comprend t₂ réseaux de détection de premier niveau, et, parmi t₂ réseaux de détection de premier niveau appartenant à un même réseau de détection de deuxième niveau, une différence de coordonnées entre des points correspondants de deux réseaux de détection de premier niveau adjacents vaut x×P/N+(t₁×P)/(t₂×N), où t₁ est un nombre naturel supérieur ou égal à 1, t₂ est un nombre naturel supérieur ou égal à 2, t₁ et t₂ sont premiers entre eux, P est une valeur prédéterminée sur la base d'une quantité totale de fentes d'un réseau utilisé par le codeur optique, N est un nombre impair supérieur ou égal à 3, x est un nombre naturel, et x est choisi de telle sorte que les réseaux de détection de premier niveau ne se chevauchent pas spatialement les uns les autres ; et
chacun des réseaux de détection de deuxième niveau délivre au moins un signal électrique de deuxième niveau, et chaque signal électrique de deuxième niveau est obtenu en additionnant un ensemble de t₂ signaux électriques de premier niveau correspondants, lesquels sont les t₂ signaux électriques de premier niveau correspondants respectivement délivrés par les t₂ réseaux de détection de premier niveau qui appartiennent à un même réseau de détection de deuxième niveau, de manière à supprimer, dans le signal électrique de deuxième niveau, une composante harmonique d'ordre N et des composantes harmoniques dont les ordres sont des multiples entiers de N.

2. Dispositif de détection photoélectrique selon la revendication 1, dans lequel :
la pluralité de réseaux de détection de deuxième niveau est divisée en une pluralité de réseaux de détection de troisième niveau, chacun des réseaux de détection de troisième niveau comprend s₂ réseaux de détection de deuxième niveau, et, parmi s₂ réseaux de détection de deuxième niveau appartenant à un même réseau de détection de troisième niveau, une différence de coordonnées entre des points correspondants de deux réseaux de détection de deuxième niveau adjacents vaut y×P/M+(s₁×P)/(s₂×M), où s₁ est un nombre naturel supérieur ou égal à 1, s₂ est un nombre naturel supérieur ou égal à 2, s₁ et s₂ sont premiers entre eux, M est un nombre impair supérieur ou égal à 3, M n'est pas égal à N, y est un nombre naturel, et y est choisi de manière à empêcher les réseaux de détection de deuxième niveau de se chevaucher spatialement les uns les autres ; et
chacun des réseaux de détection de troisième niveau délivre au moins un signal électrique de troisième niveau, chaque signal électrique de troisième niveau est généré en additionnant un ensemble de s₂ signaux électriques de deuxième niveau correspondants, lesquels sont les s₂ signaux électriques de deuxième niveau correspondants respectivement délivrés par les s₂ réseaux de détection de premier niveau qui appartiennent au même réseau de détection de troisième niveau, de manière à supprimer, dans le signal électrique de troisième niveau, une composante harmonique d'ordre M et des composantes harmoniques dont les ordres sont des multiples entiers de M.

3. Dispositif de détection photoélectrique selon la revendication 2, dans lequel :
la pluralité de réseaux de détection de troisième niveau est divisée en une pluralité de réseaux de détection de quatrième niveau, chacun des réseaux de détection de quatrième niveau comprend r₂ réseaux de détection de troisième niveau, et, parmi r₂ réseaux de détection de troisième niveau appartenant à un même réseau de détection de quatrième niveau, une différence de coordonnées entre des points correspondants de deux réseaux de détection de troisième niveau adjacents vaut z×P/Q+(r₁×P)/(r₂×Q), où r₁ est un nombre naturel supérieur ou égal à 1, r₂ est un nombre naturel supérieur ou égal à 2, r₁ et r₂ sont premiers entre eux, Q est un nombre impair supérieur ou égal à 3, Q n'est égal ni à M ni à N, z est un nombre naturel, et z est choisi de manière à empêcher les réseaux de détection de troisième niveau de se chevaucher spatialement les uns les autres ; et
chacun des réseaux de détection de quatrième niveau délivre au moins un signal électrique de quatrième niveau, et chaque signal électrique de quatrième niveau est obtenu en additionnant un ensemble de r₂ signaux électriques de troisième niveau correspondants, lesquels sont les r₂ signaux électriques de troisième niveau correspondants respectivement délivrés par les r₂ réseaux de détection de troisième niveau qui appartiennent au même réseau de détection de quatrième niveau, de manière à supprimer, dans le signal électrique de quatrième niveau, une composante harmonique d'ordre Q et des composantes harmoniques dont les ordres sont des multiples entiers de Q.

4. Dispositif de détection photoélectrique selon l'une quelconque des revendications 1 à 3, dans lequel une direction latérale est définie comme une direction d'un mouvement relatif entre le réseau du codeur optique et le dispositif de détection photoélectrique, les largeurs, dans la direction latérale, de toutes les unités de détection photoélectrique sont égales, et les largeurs, dans la direction latérale, des unités de détection photoélectrique sont égales à un multiple entier d'une période d'une composante harmonique d'ordre W, c'est-à-dire à un multiple entier de P/W, où W est un nombre impair supérieur ou égal à 3, et W n'est égal à aucun des ordres des composantes harmoniques qui ont été supprimées.

5. Dispositif de détection photoélectrique selon l'une quelconque des revendications 1 à 3, dans lequel une direction latérale est définie comme une direction d'un mouvement relatif entre le réseau du codeur optique et le dispositif de détection photoélectrique, l'au moins une unité de détection photoélectrique présente la forme d'un quadrilatère irrégulier, avec une paire de côtés opposés disposés en regard l'un de l'autre dans la direction latérale et parallèles l'un à l'autre, et un écart d'obliquité latérale du quadrilatère irrégulier est un multiple entier d'une période d'une composante harmonique d'ordre U, c'est-à-dire un multiple entier de P/U, où U est un nombre impair supérieur ou égal à 3, et U n'est égal à aucun des ordres des composantes harmoniques qui ont été supprimées ; les côtés de l'autre paire de côtés opposés sont disposés en regard l'un de l'autre dans une direction verticale, la direction verticale étant perpendiculaire à la direction latérale dans un plan sur lequel se trouve l'au moins une unité de détection photoélectrique, et les côtés de l'autre paire de côtés opposés disposés en regard l'un de l'autre dans la direction verticale ont une même forme.

6. Dispositif de détection photoélectrique selon l'une quelconque des revendications 1 à 3, une direction latérale étant définie comme une direction d'un mouvement relatif entre le réseau du codeur optique et le dispositif de détection photoélectrique, l'au moins une unité de détection photoélectrique présentant la forme d'un parallélogramme, avec une paire de côtés opposés s'étendant dans la direction latérale.

7. Dispositif de détection photoélectrique pour un codeur optique, le dispositif de détection photoélectrique comprenant un second motif, et le second motif comprenant :
une pluralité de réseaux de détection de premier niveau, chaque réseau de détection de premier niveau comprend au moins une unité de détection photoélectrique, chaque unité de détection photoélectrique délivre un signal électrique, et un signal électrique délivré par l'au moins une unité de détection photoélectrique incluse dans un réseau de détection de premier niveau sert, directement ou après combinaison, de signal électrique de premier niveau délivré par le réseau de détection de premier niveau ; dans lequel :
la pluralité de réseaux de détection de premier niveau est divisée en une pluralité de réseaux de détection de deuxième niveau, chacun des réseaux de détection de deuxième niveau comprend t₂ réseaux de détection de premier niveau, et, parmi t₂ réseaux de détection de premier niveau appartenant à un même réseau de détection de deuxième niveau, une différence de coordonnées entre des points correspondants de deux réseaux de détection de premier niveau adjacents vaut x×P/N+(t₁×P)/(t₂×N), où t₁ est un nombre naturel supérieur ou égal à 1, t₂ est un nombre naturel supérieur ou égal à 2, t₁ et t₂ sont premiers entre eux, P est la période des fentes d'un réseau utilisé dans le codeur optique, N est un nombre impair supérieur ou égal à 3, x est un nombre naturel, et x est choisi de manière à empêcher les réseaux de détection de premier niveau de se chevaucher spatialement les uns les autres ; et
chacun des réseaux de détection de deuxième niveau délivre au moins un signal électrique de deuxième niveau, et chaque signal électrique de deuxième niveau est obtenu en additionnant un ensemble de signaux électriques de premier niveau correspondants, lesquels sont les t₂ signaux électriques de premier niveau correspondants respectivement délivrés par les t₂ réseaux de détection de premier niveau qui appartiennent au même réseau de détection de deuxième niveau, de manière à supprimer, dans le signal électrique de deuxième niveau, une composante harmonique d'ordre N et des composantes harmoniques dont les ordres sont des multiples entiers de N.

8. Dispositif de détection photoélectrique selon la revendication 7, dans lequel :
la pluralité de réseaux de détection de deuxième niveau est divisée en une pluralité de réseaux de détection de troisième niveau, chacun des réseaux de détection de troisième niveau comprend s₂ réseaux de détection de deuxième niveau, et, parmi s₂ réseaux de détection de deuxième niveau appartenant à un même réseau de détection de troisième niveau, une différence de coordonnées entre des points correspondants de deux réseaux de détection de deuxième niveau adjacents vaut y×P/M+(s₁×P)/(s₂×M), où s₁ est un nombre naturel supérieur ou égal à 1, s₂ est un nombre naturel supérieur ou égal à 2, s₁ et s₂ sont premiers entre eux, M est un nombre impair supérieur ou égal à 3, M n'est pas égal à N, y est un nombre naturel, et y est choisi de manière à empêcher les réseaux de détection de deuxième niveau de se chevaucher spatialement les uns les autres ; et
chacun des réseaux de détection de troisième niveau délivre au moins un signal électrique de troisième niveau, chaque signal électrique de troisième niveau est généré en additionnant un ensemble de s₂ signaux électriques de deuxième niveau correspondants, lesquels sont les s₂ signaux électriques de deuxième niveau correspondants délivrés par les s₂ réseaux de détection de deuxième niveau appartenant au même réseau de détection de troisième niveau, de manière à supprimer, dans le signal électrique de troisième niveau, une composante harmonique d'ordre M et des composantes harmoniques dont les ordres sont des multiples entiers de M.

9. Dispositif de détection photoélectrique selon la revendication 8, dans lequel :
la pluralité de réseaux de détection de troisième niveau est divisée en une pluralité de réseaux de détection de quatrième niveau, chaque réseau de détection de quatrième niveau comprend r₂ réseaux de détection de troisième niveau, et, parmi r₂ réseaux de détection de troisième niveau appartenant à un même réseau de détection de quatrième niveau, une différence de coordonnées entre des points correspondants de deux réseaux de détection de troisième niveau adjacents vaut z×P/Q+(r₁×P)/(r₂×Q), où r₁ est un nombre naturel supérieur ou égal à 1, r₂ est un nombre naturel supérieur ou égal à 2, r₁ et r₂ sont premiers entre eux, Q est un nombre impair supérieur ou égal à 3, Q n'est égal ni à M ni à N, z est un nombre naturel, et z est choisi de manière à empêcher les réseaux de détection de troisième niveau de se chevaucher spatialement les uns les autres ; et
chacun des réseaux de détection de quatrième niveau délivre au moins un signal électrique de quatrième niveau, et chaque signal électrique de quatrième niveau est obtenu en additionnant un ensemble de r₂ signaux électriques de troisième niveau correspondants, lesquels sont les r₂ signaux électriques de troisième niveau correspondants respectivement délivrés par les r₂ réseaux de détection de troisième niveau qui appartiennent au même réseau de détection de quatrième niveau, de manière à supprimer, dans le signal électrique de quatrième niveau, une composante harmonique d'ordre Q et des composantes harmoniques dont les ordres sont des multiples entiers de Q.

10. Codeur optique, comprenant :
un réseau qui comporte une pluralité de fentes, la période des fentes étant P ;
une source lumineuse destinée à former, à travers le réseau, des bandes lumineuses variant périodiquement ; et
le dispositif de détection photoélectrique selon l'une quelconque des revendications 1 à 9, lequel est configuré pour détecter les bandes lumineuses et convertir les bandes lumineuses en un signal électrique.
